# EUROPÄISCHE PATENTSCHRIFT

(11) **EP 0 664 441 B1**
(45) Veröffentlichungstag und Bekanntmachung des Hinweises auf die Patenterteilung: **18.07.2001**
(21) Anmeldenummer: 95103691.2
(22) Anmeldetag: 24.03.1992
(51) Int. Cl.: G01D 5/20

(54) **Induktiver Stellungsgeber**
Inductive position sensor
Capteur inductif de position

(30) Priorität: 26.04.1991 DE 4113745
(43) Veröffentlichungstag der Anmeldung: 26.07.1995
(62) Teilanmeldung aus: 92105049.8
(73) Patentinhaber: Mehnert, Walter, Dr., D-85521 Ottobrunn (DE)
(72) Erfinder: Mehnert, Walter, Dr., D-85521 Ottobrunn (DE); Theil, Thomas, Dr., D-82340 Feldafing (DE)
(74) Vertreter: Strasser, Wolfgang, Dipl.-Phys

(56) Entgegenhaltungen:
- FR-A- 2 304 900
- GB-A- 2 053 489

## Beschreibung

Die Erfindung betrifft einen induktiven Stellungsgeber der im Oberbegriff des Anspruches 1 beschriebenen Art.

Solche Stellungsgeber dienen dazu, ein elektrisches Signal zu erzeugen, mit dessen Hilfe eine ständige oder intermittierend auftretende Relativbewegung zwischen zwei Körpern so überwacht bzw. messend verfolgt werden kann, daß zu jedem beliebigen Zeitpunkt eine Information über die momentane Stellung des einen der beiden Körper bezüglich des anderen zur Verfügung steht.

Ein Ausführungsbeispiel sind Lineargeber, bei denen z. B. die Bewegung und/oder momentane Stellung eines Maschinenschlittens, der gegenüber dem Maschinenrahmen verschiebbar ist, mit hoher Präzision erfaßt und gesteuert werden soll. Dazu ist es erforderlich, ständig ein Signal zu gewinnen, das auch dann, wenn sich der Schlitten mit hoher Geschwindigkeit bewegt, Auskunft über die momentane Position des Schlittens liefert.

Eine andere Ausführungsform stellen Drehgeber dar, mit deren Hilfe die momentane Winkellage eines rotierenden Körpers, beispielsweise des Rotors eines Elektromotors bezüglich des Stators, oder der Drehwinkel zwischen zwei gegeneinander verdrehbaren Körpern, beispielsweise der Azimut- oder Vertikalwinkel des Fernrohrs eines Theodoliten gemessen werden soll.

In ähnlicher Weise lassen sich mit Drehgebern die Winkelstellungen bzw. Drehgeschwindigkeiten von Kraftfahrzeugrädern oder die momentane Winkelstellung einer Vergaser-Drosselklappe messen.

Ein linearer Stellungsgeber der eingangs genannten Art ist der DE-PS 25 11 683 entnehmbar. Bei diesem bekannten Geber umfaßt die ferromagnetische Fluß-Führungsvorrichtung zwei rechteckige, längliche, ebene Platten, die zueiander parallel so angeordnet sind, daß sie zwischen ihren Flachseiten einen Luftspalt einschließen. An einer der beiden kurzen Rechteckssseiten sind diese Platten durch einen senkrecht zu den Plattenebenen verlaufenden Steg so verbunden, daß sich ein U-förmiger Längsschnitt ergibt. Dieser Steg erstreckt sich durch eine Erregerspule, die mit Wechselstrom gespeist wird, um einen Magnetfluß zu erzeugen, der über den Luftspalt hinweg einem ringförmig geschlossenen Weg folgen kann, wobei im Luftspalt ein in etwa homogenes Magnetfeld ausgebildet wird.

Diese Fluß-Führungsvorrichtung ist mit dem einen der beiden gegeneinander bewegbaren Körper verbunden, während mit dem anderen eine als gedruckte Schaltung ausgebildete Meßspulenanordnung gekoppelt ist, die mehrere, beispielsweise zwei Flächenelemente aufweist, von denen jedes von einer eigenen Meßspulenwicklung umschlossen ist, die im einfachsten Fall aus einer einzigen Windung besteht, zwischen deren beiden offenen Enden ein Wechselspannungssignal abgegriffen werden kann. Bei einer in der obigen Druckschrift wiedergegebenen Ausführungsform sind die beiden Flächenelemente in Form von rechtwinkeligen Dreiecken ausgebildet und so in einer Ebene nebeneinander angeordnet, daß sie sich zu einem langgestreckten Rechteck ergänzen, dessen Längsseiten parallel zur Verschiebungsrichtung der von den Spaltwänden der Fluß-Führungsvorrichtung definierten Durchtrittsfläche verlaufen. Diese Durchtrittsfläche besitzt ebenfalls die Form eines Rechtecks, dessen Ausdehnung in Verschiebungsrichtung im Vergleich zur Länge der maximalen Verschiebungsweite klein ist und das senkrecht zur Verschiebungsrichtung etwas größer als das von den beiden dreieckigen Flächenelementen gebildete Rechteck ist und dieses ständig überdeckt. Die Leiterabschnitte der beiden Windungen, die die Hypotenusen der beiden Dreiecke bilden, verlaufen in einem vorgegebenen Abstand zueinander parallel und schräg zur Verschiebungsrichtung der Durchtrittsfläche so, daß bei deren Verschiebung der Teil des im Spalt übertretenden Magnetflusses, der das eine Flächenelement durchsetzt, in dem Maß zunimmt, wie der das andere Flächenelement durchsetzende Teil kleiner wird und umgekehrt. Die beiden so erhaltenen Meßspulensignale werden nach Gleichrichtung voneinander subtrahiert, so daß man ein in etwa lineares, zum Nullpotential symmetrisches und von einem Teil der möglichen Störeinflüsse befreites Signal erhält, das für die momentane Stellung der beiden zu überwachenden Körper repräsentativ ist.

Durch eine andere Ausgestaltung und Anordnung der Flächenelemente und/oder der Durchtrittsfläche lassen sich auch für ein solches Differenzsignal andere als lineare Verläufe vorgeben, wie dies oben für den allgemeinen Fall einer beliebigen Anzahl von Flächenelemente bereits erläutert wurde.

Für alle diese Differenzsignale zeigt sich, daß ihr tatsächlicher Verlauf von dem durch die gewählte Konstruktion theoretisch vorgegebenen Verlauf, also beispielsweise von der angestrebten Linearität, zumindest in bestimmten Teilen des zu überwachenden Bewegungsbereiches abweicht und so die Meßgenauigkeit und/oder das Auflösungsvermögen in unerwünschter Weise begrenzt.

So endet der in der DE-PS 25 11 683 angestrebte lineare Verlauf der Ausgangssignal-Kennlinie bei Annäherung an die beiden Endlagen jeweils nicht in einer scharfen, sondern einer abgerundeten Spitze. Außerdem zeigt sich in der Praxis, daß die Kennlinie einer solchen Anordnung auch im Bereich des Nulldurchgangs nicht linear sondern S-förmig verzerrt verläuft. Zwar können diese Nichtliearitäten mit Hilfe der dem Geber nachgeschalteten Elektronik teilweise kompensiert werden. Dies erfordert jedoch einen zusätzlichen Aufwand und damit erhöhte Kosten.

Demgegenüber liegt der Erfindung die Aufgabe zugrunde, induktive Stellungsgeber der eingangs genannten Art so weiterzubilden, daß bei möglichst einfachem Aufbau und geringem Aufwand das unmittelbare Ausgangssignal des Gebers über einen möglichst großen Teil des Bewegungsbereiches mit möglichst großer Genauigkeit dem Konstruktions-Kennlinienverlauf folgt.

Zu Lösung dieser Aufgabe sieht die Erfindung die im Anspruch 1 niedergelegten Merkmale vor.

Diesen erfindungsgemäßen Maßnahmen liegt die Erkenntnis zugrunde, daß ein Teil der Schwierigkeiten, die sich beim Stand der Technik hinsichtlich der Meßgenauigkeit und des Auflösungsvermögens ergeben, weil die tatsächlich erzielte Ausgangssignal-Kennlinie vom theoretisch vorgegebenen Verlauf abweicht, darauf zurückzuführen ist, daß sowohl Streuanteile des von der Erregerspule erzeugten Magnetflusses als auch Feldinhomogenitäten insbesondere in den Randbereichen der Durchtrittsfläche auf die Meßspulenanordnung in Abhängigkeit von der zu überwachenden Bewegung veränderlich einwirken.

Um diese Störungen zu vermindern, hat es sich die Erfindung daher zum Ziel gesetzt, induktive Stellungsgeber so auszubilden, daß bei möglichst einfachem Aufbau ein maximaler, ungestörter und homogner die Meßspulenanordnung durchsetzender Magnetfluß erzielt wird.

Einen ersten wesentlichen Schritt in dieser Richtung stellt die in EP 05 10 367 B1 ausführlich erläuterte Maßnahme dar, daß dem von der Erregerspule erzeugten Magnetfluß wenigstens zwei ringförmig geschlossene Wege angeboten werden, von denen einer als Meßweg dient, d.h. den zur Erzeugung des Meßsignals verwendeten Nutz-Magnetfluß über den Spalt leitet, der die Durchtrittsfläche definiert und in dessen Bereich das wenigstens eine Flächenelement der Meßspulenanordnung positioniert ist, während wenigstens ein weiterer ringförmig geschlossener Weg als Ausgleichsweg dient und einen möglichst großen Teil des übrigen von der Erregerspule kommenden Magnetflusses so führt, daß er auf dieses wenigstens eine Flächenelement zumindest keinen bewegungs- bzw. stellungsabhängigen Einfluß ausüben kann.

Um zu einer weiteren Verbesserung zu kommen, d.h. einen noch größeren ungestörten, homogenen Nutzfluß zu erzielen, ist gemäß der Erfindung vorgesehen, daß die wenigstens zwei Flächenelemente ein gemeinsames Randstück aufweisen, über das sich die Durchtrittsfläche aufgrund der zu überwachenden Bewegung hinweg verschieben kann.

Dieser Maßnahme liegt folgende Erkenntnis zugrunde: Verwendet man, wie dies beim Stand der Technik der Fall ist, zur Trennung von zwei einander benachbarten Flächenelementen zwei nebeneinanderliegende, in Verschiebungsrichtung der Durchtrittsfläche einen Abstand aufweisende Randstücke, die jeweils von einem Leiterstück der zugehörigen Meßspulenwicklung definiert werden, so bleibt zwischen diesen Rändern immer ein Flächenbereich, der weder zu dem einen noch zu dem anderen Flächenelement gehört. Der magnetische Fluß, der diesen Flächenbereich durchsetzt, während sich die Durchtrittsfläche über die beiden Flächenelemente verschiebt, trägt zur Erzeugung eines Meßsignals weder in der das eine Flächenelement umschließenden Meßspule noch in der das andere Flächenelement umschließenden Meßspule bei. Das führt dann, wenn der Einfluß von Störfeldern durch die Differenzbildung nicht völlig eliminiert werden kann zu einem Fehler dessen relative Größe um so größer ist, je größer das Verhältnis des ungenutzten Flächenbereichs zur genutzten Durchtrittsfläche ist.

Darüber hinaus hat der zwischen den Flächenelementen liegende Flächenbereich zur Folge, daß an die beiden im Abstand zueinander verlaufenden Rand-Leiter sehr hohe Parallelitätsanforderungen gestellt werden müssen. Ändert sich nämlich der Abstand dieser beiden Leiter über ihre Länge hinweg entweder in ständig zu- bzw. abnehmender oder in alternierender Weise, so ist auch der zwischen den von Meßspulenwicklungen umschlossenen Flächenelementen verloren gehende Anteil des magnetischen Flusses im Spalt stellungsabhängig. Der verbleibende, die eine oder die andere Meßspule durchsetzende magnetische Fluß erhält damit eine zusätzliche stellungsabhängige Komponente, die zu einer Abweichung zwischen dem praktischen und dem theoretischen Verlauf der Ausgangskennlinie führt.

Ein weiteres Problem ergibt sich beim Stand der Technik aus den an den Rändern des Spaltes bzw. der von ihm definierten Durchtrittsfläche immer und in unvermeidlicher Weise vorhandenen Feldinhomogenitäten. Nähert sich ein solcher Rand an die Grenzzone einander benachbarter Flächenelemente an, so verlassen beim Stand der Technik Feldbereiche die Überdeckung mit dem einen Flächenelement, die eine höhere Magnetflußdichte besitzen, als die gleichzeitig in eine Überdeckung mit dem benachbarten Flächenelement eintretenden Feldbereiche und umgekehrt, was erhebliche Fehler nach sich zieht.

Demgegenüber stellt der erfindungsgemäß vorgesehene gemeinsame Rand zwischen den einander benachbarten Flächenelementen sicher, daß jede Feldlinie, die die Überdeckung mit dem einen Flächenelement verläßt, notwendigerweise in eine Überdeckung mit dem Nachbar-Flächenelement eintritt und umgekehrt. Darüber hinaus wird erreicht, daß die Verschiebungsweite, die durchlaufen werden muß, bis der die beiden Flächenelemente voneinander trennende Rand nach seinem Eintreten in merkbare inhomogene Feldbereiche den homogenen Feldbereich im Spaltinneren bzw. einen praktisch feldfreien Bereich außerhalb des Spaltes erreicht, auf absolutes Minimum reduziert wird. Als Ergebnis hiervon ergibt sich eine stark verbesserte Annäherung des tatsächlichen Kennlinienverlaufes an die "Konstruktionskennlinie".

Zwar ist aus der GB 2;053,489 A ein magnetoelektrischer Bewegungssensor bekannt, bei dem die Meßspulenanordnung zwei jeweils von einer Meßspulenwindung umschlossene Flächenelemente aufweist. Die beiden Meßspulenwindungen besitzen zwar ein gemeinsames Leiterstück, doch sind sie zueinander parallel geschaltet, so daß sich lediglich eine entsprechende Vergrößerung des an den Spulenanschlüssen abgreifbaren Stroms ergibt. Eine Veränderung der Signalform und damit eine Lösung der sich bei der Anordnung der eingangs genannnten DE-PS-25 11 683 ergebenden Nichtlinearitätsprobleme ist mit dieser Anordnung jedoch nicht möglich. Dies beruht darauf, daß hier keine Durchtrittsflächen im Sinne der vorliegenden Erfindung vorhanden sind, die sich somit auch nicht über das gemeinsame Leiterstück verschieben können. Letzteres bildet demgemäß kein "Randstück" im Sinne der Erfindung.

Der gemeinsame Rand zwischen einander benachbarten Flächenelementen läßt sich auch dadurch erzielen, daß die beiden Flächenelemente zumindest in diesem Randbereich nicht exakt in der gleichen Fläche liegen sondern, in Richtung des den Spalt durchsetzenden Magnetflusses gesehen, mit einem möglichst kleinen Abstand hintereinander so angeordnet sind, daß sie miteinander zur Deckung kommen. Dies bedingt aber einen etwas aufwendigeren Aufbau der Meßspulenanordnung; bei einer Ausführung der Meßspulen als gedruckte Schaltungen muß beispielsweise eine beidseitig beschichtete Platine verwendet werden. Außerdem muß dafür gesorgt werden, daß die beiden hintereinander liegenden, den gemeinsamen Rand definierenden Leiterstücke symmetrisch zur Spalthöhenmitte liegen, um den Einfluß von Feldinhomogenitäten auf ein absolutes Minimum zu reduzieren.

Um diesen Aufwand, zu dem auch noch die genaue Positionierung der beiden hintereinander anzuordnenden Leiter kommt, zu vermeiden, ist daher bei einer besonders bevorzugten Ausführungsform vorgesehen, daß das gemeinsame Randstück von einem Leiterstück gebildet wird, das den beiden Meßspulenwicklungen, die die beiden Flächenelemente umschließen, gemeinsam ist. Außerdem ist es zweckmäßig, dieses gemeinsame Leiterstück möglichst senkrecht zur Verschiebungsrichtung der Durchtrittsfläche verlaufen zu lassen und so kurz wie irgend möglich auszubilden. Baut man die Meßspulenanordnung als gedruckte Schaltung auf, so erhält man auf diese Weise eine besonders einfache Platinengestaltung, da die beiden einander benachbarten Flächenelemente auf der gleichen Platinenseite angeordnet werden können. Der Verlauf des gemeinsamen Leiterstücks ist durch eine einzige Maske bestimmt, so daß für die Effektivität der von ihm bewirkten Feldteilung die Genauigkeit keine Rolle mehr spielt, mit der ansonsten zwei zur Herstellung von doppelseitigen gedruckten Schaltungen benötigte Masken zueinander positioniert werden müßten.

Eine besonders einfache Gestaltung einer Meßspulenanordnung mit zwei jeweils von einer Meßspulenwindung umschlossenen Flächenelementen läßt sich dadurch erzielen, daß zwei Leiterabschnitte, von denen der eine das eine Flächenelement und der andere das andere Flächenelement jeweils längs eines Randes begrenzt, der in etwa parallel zur Verschiebungsrichtung der Durchtrittsfläche gegen das betreffende Flächenelement verläuft, an ihren beiden Enden zur Bildung eines ringförmig geschlossenen Leiters miteinander verbunden sind. Dieser ringförmig geschlossene Leiter muß dann allerdings einen elektrischen Widerstand aufweisen, der keinen Kurzschluß darstellt. Dies ist erforderlich, um keine zu hohe Belastung der Signalquelle zu verursachen und den Strom in dem geschlossenen Leiter zu begrenzen.

Mit einer solchen Anordnung können die beiden Ausgangssignale von zwei Meßspulen über drei Ausgangsanschlüsse abgegriffen werden, von denen der eine zu dem beiden Meßspulen gemeinsamen geschlossenen Leiter führt. Diese Anordnung ist insbesondere bei Drehgebern vorteilhaft. Sie führt zu einer besonders hohen Meßgenauigkeit, wenn der ringförmig geschlossene Leiter so angeordnet ist, daß in jeder beliebigen Stellung der gegeneinander bewegbaren Körper durch die von ihm umschlossene Fläche sowohl der die Erregerspule als zumindest auch der den Ausgleichsweg durchsetzende Magnetfluß hindurchtritt. Dadurch wird das Ausgangssignal einer jeden der beiden Meßspulen durch Integration über den weitaus größten Teil des in der Anordnung auftretenden Magnetflusses erzeugt. Dabei werden in jedem der beiden Ausgangssignale auch nahezu alle Störgrößen in gleicher Weise erfaßt, sodaß sie sich bei der nachfolgenden Differenzbildung herausheben. Im Übrigen ermöglicht nur ein ringförmig geschlossener Leiter, daß ein einziger Leitersteg zur Aufteilung des Magnetflusses bei Meßwinkeln von 360° oder mehr für die Erzielung höchster Genauigkeit verwendet werden kann.

Umfaßt nämlich, wie dies bei bestimmten Anwendungsfällen sinnvoll ist, die Meßspulenanordnung mehrere, in Bewegungsrichtung gegeneinander versetzt angeordnete Flächenelemente, deren Ausgangssignale im Verlauf der zu überwachenden Bewegung nacheinander ausgewertet werden oder mit einer sich im Verlauf der Bewegung ändernden Gewichtung zur Bildung eines Meßsignals herangezogen werden, so bietet ein solcher geschlossener Leiter den Vorteil, daß er für alle derartige Meßspulen-Untersysteme gemeinsam verwendet werden kann und für diese verschiedenen Untersysteme lediglich an verschiedenen Stellen herausgeführte Ausgangsanschlüsse aufweist.

Weitere vorteilhafte Ausgestaltungen der Meßspulenanordnung sind in den abhängigen Patentansprüchen niedergelegt.

Die Erfindung wird im folgenden anhand von Ausführungsbeispielen unter Bezugnahme auf die Zeichnung beschrieben; in dieser zeigen:
- Fig. 1: in auseinandergezogener Darstellung einen Drehgeber, bei dem der Kern der Fluß-Führungsvorrichtung drehfest mit der Erreger- und Meßspulenanordnung verbunden ist, während sich das Joch gegen den Kern und die Meßspulenanordnung dreht,
- Fig. 2: einen Schnitt längs der Linie II-II durch den zusammengebauten Drehgeber aus Fig. 1,
- Fig. 3: in auseinandergezogener Darstellung einen Drehgeber, bei dem sich die gesamte Flußführungs-Vorrichtung gegen die Spulenanordnung dreht,
- Fig. 4: einen Schnitt durch den zusammengebauten Drehgeber aus Fig. 3 längs der Linien IV-IV,
- Fig. 5: in auseinandergezogener Darstellung einen Linargeber, bei dem sich das Joch gegen den Kern und die mit diesem fest verbundene Spulenanordnung verschiebt,
- Fig. 6: einen Schnitt durch den zusammengebauten Lineargeber aus Fig. 5 längs der Linie VI-VI,
- Fig. 7: einen Drehgeber mit beweglichem Joch, bei dem ein kleiner, periodisch wiederkehrender Winkelbereich messend erfaßt und aufgelöst wird, insbesondere zur Verwendung bei Kfz-Antiblockiersystemen,
- Fig. 8: eine Meßspulenanordnung für einen Drehgeber mit einem innenliegenden geschlossenen Leiter und nach außen geführten Ausgangsanschlüssen»
- Fig. 9: eine Meßspulenanordnung für einen Drehgeber mit einem außenliegenden geschlossenen Leiter und nach innen geführten Ausgangsanschlüssen,
- Fig. 10: eine Meßspulenanordnung für einen Drehgeber mit zwei einen gemeinsamen Randleiter besitzenden Flächenelementen, deren Ausgangssignale über vier Ausgangsanschlüsse abgegriffen werden, und
- Fig. 11: eine Meßspulenanordnung für einen Drehgeber mit zwei um 90° gegeneinander verdrehten Meßspulengruppen, die einen gemeinsamen inneren geschlossenen Leiter besitzen.

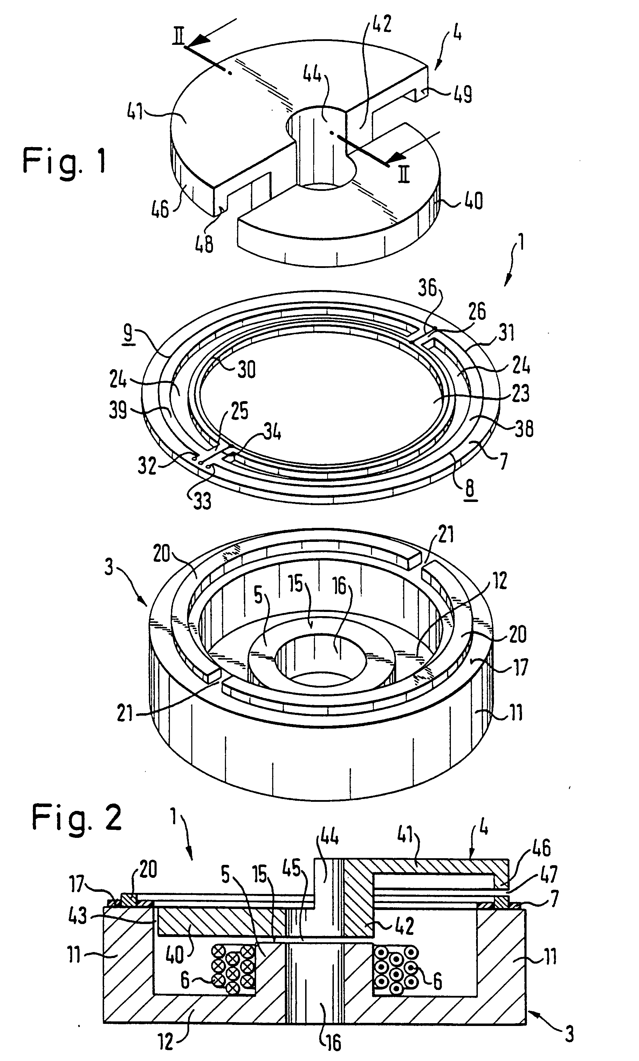

Der in Fig. 1 und 2 dargestellte Drehgeber 1 umfaßt eine Fluß-Führungsvorrichtung aus ferromagnetischem Material, die aus einem in Form eines Topfes ausgebildeten Kern 3 und einem Joch 4 besteht, eine um einen Zapfen 5 des Kerns 3 gewickelte Erregerspule 6 (in Fig. 1 weggelassen), und eine Trägerplatine 7, auf deren einen Flachseite zwei Meßspulen 8, 9 in Form von gedruckten Schaltungen aufgebracht sind.

Der Kern 3 ist ein hohler Kreiszylinder mit einer Zylinderwand 11, die mit einem Boden 12 einstückig verbunden ist. Von der Innenseite des Bodens 12 erstreckt sich der ebenfalls einstückig angeformte Zapfen 5, der als Kreiszylinder ausgebildet und konzentrisch zur Zylinderwand 11 angeordnet ist, über eine solche Höhe, daß der Abstand seiner in den Fig. 1 und 2 oben liegende Stirnfläche 15 von der durch die Stirnfläche 17 der Zylinderwand 11 definierten Ebene etwas größer ist als die axiale Dicke der weiter unten noch genauer beschriebenen unteren Halbkreisscheibe 40 des Joches 4. Der Zapfen 5 und der Boden 12 sind von einer zentralen durchgehenden Bohrung 16 durchzogen, die zur Aufnahme einer nicht dargestellten Welle dienen kann.

Auf der Stirnfläche 17 der Zylinderwand 11 ist eine kreisringförmige, konzentrisch angeordnete, in den Figuren nach oben vorspringende Rippe 20 vorgesehen, die einen in etwa quadratischen Querschnitt besitzt und etwa in der Mitte zwischen innerer und äußerer Umfangskante der Stirnfläche 17 verläuft. An zwei gegeneinander um 180° versetzten Stellen ist die Rippe 20 von zwei Ausnehmungen 21 durchbrochen, die sich bis zur Stirnfläche 17 erstrecken.

Die Trägerplatine 7 ist in Form eines Kreisringes ausgebildet, wobei der Durchmesser ihrer zentralen Öffnung 23 gleich oder etwas größer als der Innendurchmesser und ihr Außendurchmesser etwas kleiner als der Außendurchmesser der Zylinderwand 11 sind. Weiterhin besitzt die Trägerplatine 7 zwei teil-kreisringförmige durchgehende Öffnungen 24,24, die konzentrisch so angeordnet sind, daß sie sich fast zu einer kreisringförmigen Öffnung ergänzen, die lediglich an zwei einer gegenüberliegenden Stellen durch einen schmalen Verbindungssteg 25, 26 unterbrochen ist. Die Öffnungen 24, 24 und die Verbindungsstege 25, 26 sind so angeordnet und dimensioniert, daß die Trägerplatine 7 auf die Stirnfläche 17 aufgesetzt werden kann, wobei sich die beiden Teile der Rippe 20 durch die Öffnungen 24 hindurcherstrecken und die Verbindungsstege 25 und 26 in den Ausnehmungen 21 verlaufen. Auf diese Weise ist die Trägerplatine 7 drehfest mit dem Kern 3 verbunden.

Die auf der in den Fig. 1 und 2 oben liegenden Seite der Trägerplatine 7 befindlichen Meßspulen 8, 9 umfassen zwei kreisförmige, konzentrisch angeordnete Leiter 30, 31, von denen sich der innere innerhalb und der äußere außerhalb der Öffnungen 24, 24 befindet. Der innere Leiter 30 ist vollständig geschlossen, während der äußere Leiter 31 eine kleine Unterbrechung aufweist, an der seine Enden mit zwei in etwa radial und zueinander parallel nach außen verlaufenden Anschlußleitern 32, 33 verbunden sind. Zwischen diesen beiden Anschlußleitern 32, 33 für den äußeren Leiter 31 und parallel zu ihnen erstreckt sich über den Verbindungssteg 25 ein radial verlaufender Anschlußleiter 34 für den inneren Leiter 30. Über den diametral gegenüberliegenden Verbindungssteg 26 erstreckt sich ein radial verlaufender Verbindungsleiter 36, der die Leiter 30, 31 elektrisch leitend miteinander verbindet.

Somit umschließen die beiden Meßspulen 28, 29, von denen jede aus einer einzigen Windung besteht, zwei halbkreisringförmige Flächenelemente 38, 39, die hier in einer Ebene liegen, sich zu einem praktisch geschlossenen Kreisring ergänzen und zwei gemeinsame Randstücke aufweisen, die von dem mittleren Anschlußleiter 34 und dem Verbindungsleiter 36 gebildet werden.

Das Joch 4 besteht im wesentlichen aus zwei halbkreisförmigen Scheiben 40, 41, die unterschiedliche Radien besitzen und so angeordnet sind, daß ihre sich längs des Kreisdurchmessers ersteckenden Kanten in Draufsicht unmittelbar nebeneinander verlaufen und die beiden Kreisbögen voneinander wegorientiert sind In axialer Richtung sind die Scheiben 40, 41 voneinander im Abstand angeordnet und durch ein halb-kreiszylindrisches Verbindungsstück 42 miteinander verbunden. Der Radius der Halbkreisscheibe 40 ist etwas kleiner als der Innenradius der Zylinderwand 11, während der Radius des halbzylindrischen Verbindungsstücks 42 dem Radius des Zapfens 5 entspricht. Die in den Figuren untere Fläche der unteren Halbkreisscheibe 40 fluchtet mit der unteren Stirnfläche des Verbindungsstücks 42, dessen obere Stirnfläche mit der oberen Fläche der oberen Halbkreisscheibe 41 in einer Ebene liegt.

Konzentrisch zu den beiden Halbkreisscheiben 40, 41 und dem halbzylindrischen Verbindungsstück 42 erstreckt sich durch diese Teile in axialer Richtung eine Bohrung 44, die den gleichen Durchmesser wie die Bohrung 16 im Zapfen 5 aufweist. Im zusammengebauten Zustand ist das Joch 4 so angeordnet, daß die beiden Bohrungen 16, 44 miteinander fluchten und die untere Halbkreisscheibe 40 so innerhalb der Zylinderwand 11 des Kerns 3 angeordnet ist, daß ihre in Fig. 2 obere Fläche mit der Stirnfläche 17 der Zylinderwand 11 fluchtet.

Der Radius der oberen Halbkreisscheibe 41 ist gleich dem Aussenradius der Rippe 20. An ihrer in den Fig. 1 und 2 unteren Seite besitzt die obere Halbkreisscheibe 41 eine nach unten vorspringenden Rippe 46, die sich über den gesamten Umfang der Halbkreisscheibe 41 erstreckt und die gleichen Abmessungen wie die Rippe 20 aufweist. Im zusammengebauten Zustand liegen sich die nach unten weisende Stirnfläche der oberen Rippe 46 und ein entsprechend großer Teil der oberen Stirnfläche der unteren Rippe 20 mit einem geringen Abstand gegenüber, so daß diese beiden Stirnflächen zwischen sich einen Spalt 47 einschließen, der in Wirklichkeit wesentlich kleiner sein kann, als dies in Fig. 2 der Deutlichkeit halber dargestellt ist. Der Luftspalt 43 zwischen der zylindrischen Außenfläche der unteren Scheibe 40 und der Innenfläche der Zylinderwand 11 ist so gewählt, daß sich durch ihn derselbe magnetische Widerstand ergibt wie durch den Spalt 47. Auch der Luftspalt 45 zwischen der Unterseite der Scheibe 40 und des Verbindungsstücks 42 einerseits und der oberen Stirnfläche 15 des Zapfens 5 andererseits wird möglichst klein ausgebildet.

Demgegenüber ist der freie Abstand zwischen der zylindrischen Außenwand des Verbindungsstücks 42 und der gegenüberliegenden Innenfläche der Zylinderwand 11 so groß, daß hier ein großer magnetischer Widerstand vorhanden ist.

Wird nun der Erregerspule 6 über nicht dargestellte Anschlüsse eine Wechselspannung zugeführt, so erzeugt sie einen magnetischen Fluß, dem durch die beschriebene Ausbildung des Kerns 3 und des Joches 4 zwei ringförmig geschlossene Wege angeboten werden, die zwar geometrisch unterschiedlich ausgebildet sind, aber im wesentlichen die gleichen magnetischen Widerstände aufweisen. Der eine dieser beiden Wege verläuft von dem die Erregerspule 6 durchsetzenden Zapfen 5 über den Spalt 45 in das halbzylindrische Verbindungsstück 42, durch die obere halbkreisförmige Scheibe 41, die Rippe 46, den Spalt 47, die Rippe 20, die Zylinderwand 11 und über den Boden 12 zurück zum Zapfen 5. Der sich längs dieses Meßweges ausbreitende Magnetfluß durchsetzt immer wenigstens eine der beiden Meßspulen 8, 9, im allgemeinen aber beide Meßspulen mit unterschiedlichen Anteilen, deren jeweilige Größe von der momentanen Stellung des Joches 4 bezüglich des Kerns 3 abhängt.

Der andere ringförmig geschlossene Weg erstreckt sich vom Zapfen 5 über den Spalt 45, durch die untere halbkreisförmige Scheibe 40, über den Spalt 43 unmittelbar in die Zylinderwand 11 und durch den Boden 12 zurück zum Zapfen 5. Der magnetische Fluß in diesem ringförmig geschlossenen Ausgleichsweg bleibt immer unterhalb der Ebenen der Meßspulen 8, 9 und kann diese nicht durchsetzen. Da nun der Kern 3 und die Meßspulen-Trägerplatine 7 mit dem einen der beiden nicht dargestellten Körper, deren gegenseitige Drehbewegung überwacht werden soll, drehfest verbunden ist, während das Joch 4 mit dem anderen dieser beiden Körper in drehfester Verbindung steht, verschiebt sich aufgrund der zu überwachenden Drehbewegung die nur einen halben Kreisumfang überspannende Rippe 46 gegen die praktisch einen vollen Kreisumfang überdeckende Rippe 20. Zwischen den aufeinander zuweisenden Stirnflächen dieser beiden Rippen, die die Wandflächen des Spaltes 47 bilden, wird der magnetische Fluß, der hier zwischen dem Kern 3 und dem Joch 4 übertritt, auf einen Raumbereich konzentriert, der, wie der Spalt 47, in etwa die Form eines halben Kreiszylinders besitzt. Die Projektion dieses Raumbereiches auf die Ebene der Meßspulen 8, 9 bildet die Durchtrittsfläche, die hier die Form einer halben Kreisringfläche besitzt und deren Größe in etwa gleich der nach unten weisenden Stirnfläche der Rippe 46 ist. Diese Durchtrittsfläche verschiebt sich gegen die beiden Meßspulen 8, 9 wenn sich die beiden zu überwachenden Körper gegeneinander verdrehen.

An den Ausgangsanschlüssen 32, 33 der beiden Meßspulen 8,9 können bezüglich des Ausgangsanschlusses 34 zwei Spannungen abgegriffen werden, deren Differenz in den beiden Stellungen gleich Null ist, in denen das Joch 4 gegen den Kern 3 so gedreht ist, daß die untere Stirnfläche der Rippe 46 zur Hälfte dem Teil der Rippe 20 gegenübersteht, der die Meßspule 8 durchsetzt und zur Hälfte dem Teil der Rippe 20, der sich durch die Meßspule 9 erstreckt. In den beiden anderen Stellungen, in denen die Durchtrittsfläche entweder völlig über der Meßspule 8 oder völlig über der Meßspule 9 liegt, so daß der gesamte über den Spalt 47 übertretende Magnetfluß durch die eine oder die andere dieser beiden Meßspulen geht, während die jeweils andere von keinem magnetischen Fluß durchsetzt wird, besitzt das Differenzsignal ein Minimum bzw. ein Maximum. Dazwischen ergibt sich für alle die Stellungen ein linearer Anstieg bzw. Abfall, in denen ein Teil des im Spalt 47 übertretenden Magnetflusses durch die eine der beiden Meßspulen 8, 9 und ein Teil durch die andere dieser beiden Meßspulen geht.

Bei einer vollen Drehung des Joches 4 gegen den Kern 3 um 360° erhält man also einen dreieckigen Kurvenverlauf, bei dem das Differenzsignal über 180° hinweg linear ansteigt um dann über 180° hinweg wieder linear abzufallen, wobei Minima und Maxima symmetrisch zum Nullpotential der beiden Mittelstellungen liegen.

Die Ausnehmungen 21 in der Rippe 20 können nach dem Aufsetzen der Trägerplatine 7 mit ferromagnetischem Material ausgefüllt werden, so daß die Leiterstücke 34 und 36 nahezu gleichförmig von ferromagnetischem Material umgeben sind. In Verbindung mit der erfindungsgemäßen Maßnahme, die beiden Meßspulen 8, 9 bzw. die von ihnen umschlossenen Flächenelemente 38, 39 so anzuordnen, daß sie dort, wo ihre Berandung von der durch den Spalt 47 definierten Durchtrittsfläche überstrichen wird, einen gemeinsamen, hier vom Anschlußleiter 34 bzw. vom Verbindungsleiter 36 gebildeten Rand aufweisen, erhält man eine äußerst exakte Flußteilung. Das bedeutet, daß jede Feldlinie, die aufgrund einer Relativverschiebung zwischen dem Kern 3 und dem Joch 4 nicht mehr durch die eine der beiden Meßspulen 8, 9 hindurchtritt, notwendigerweise durch die jeweils andere Spule hindurchtreten muß. Senkrecht zur Bewegungsrichtung sind die Flächenelemente 38, 39 deutlich größer als die die Wandflächen des Spaltes 47 bildenden, einander gegenüberliegenden Stirnflächen der Rippen 20, 46, so daß in radialer Richtung auftretende Inhomogenitäten des Magnetfeldes die Meßsignale kaum beeinflussen, da sich alle zu den Meßsignalen beitragenden Feldlinien immer, insbesondere auch dann, wenn Exzentrizitäts- oder Lagerspielbewegungen auftreten, innerhalb der von den Meßspulen 8, 9 umschlossenen Flächenbereiche 38, 39 befinden. Radial noch weiter außen verlaufende Streufeldanteile, für dies nicht mehr gilt, sind so schwach, daß ihnen hinsichtlich der Genauigkeit des Meßergebnisses und des Kennlinienverlaufes keine Bedeutung zukommt.

Dadurch, daß der gesamte von der Erregerspule 6 erzeugte Magnetfluß auf zwei nahezu vollständig geschlossenen Wegen geführt wird, treten sehr wenig Störflüsse auf. Die verbleibenden Störflüsse, die zwischen der halbkreisförmig gebogenen Außenwand des Verbindungsstücks 42 und der Innenseite der Zylinderwand 11 bzw. der Unterseite der halbkreisförmigen Scheibe 41 und der Oberseite des Bodens 12 auftreten, sind weitgehend homogen und wegen der großen geomtrischen Abstände außerordentlich klein.

Verdreht sich das Joch 4 gegen den Kern 3, so wandern diese Streuflüsse zwar mit, ohne dabei aber ihre Einflußmöglichkeiten auf die Meßspulen 8, 9 zu verändern. Magnetflußlinien, die zwischen dem Zapfen 5 und dem Joch 4 über den Spalt 45 hinweg verlaufen, werden entweder bereits in der unteren halbkreisförmigen Scheibe 40 oder nach Durchlaufen des Verbindungsstücks 42 in der oberen halbkreisförmigen Scheibe 41 in radialer Richtung umgelenkt, ohne daß es dabei an den längs der Kreisdurchmesser verlaufenden Rändern dieser beiden Scheiben zu merklichen Feldverformungen kommt. Feldinhomogenitäten, die an den durch die Endflächen 48,49 der Rippe 46 definierten, je nach Bewegungsrichtung vorderen oder hinteren Rändern des Spaltes 47 auftreten, sind somit auf ein Minimum reduziert. Man erhält also eine Drehgeberanordnung, die sehr wenig Streuflüsse nach außen abgibt, umgekehrt aber auch gegen von außen kommende magnetische Störungen unempfindlich ist und dabei ein Ausgangssignal liefert, das in optimaler Weise dem vorgegebenen "Konstruktionskennlinien"-Verlauf folgt.

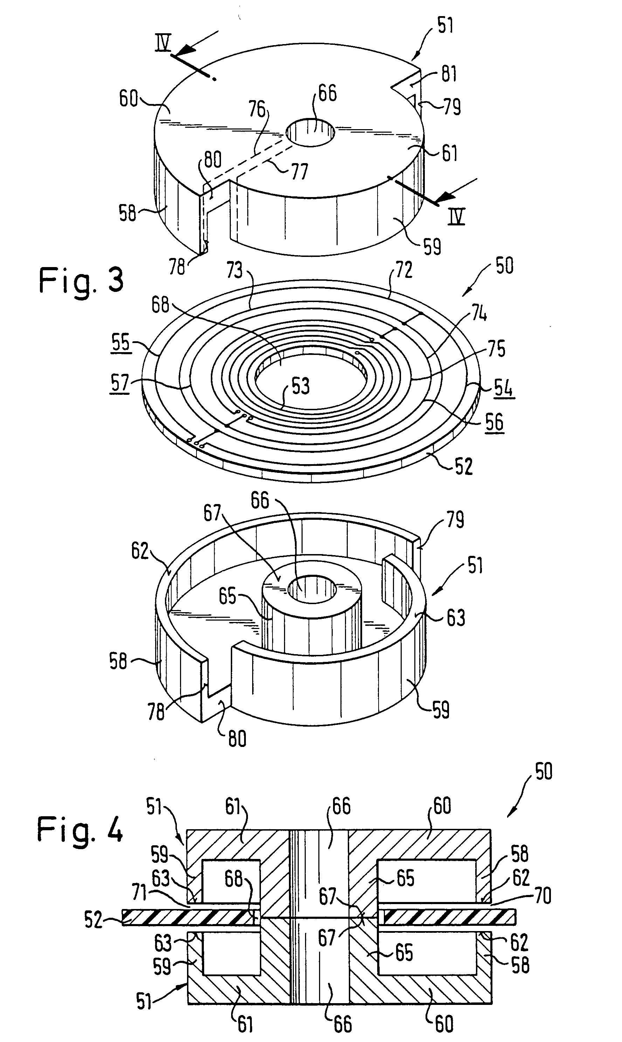

Der in den Fig. 3 und 4 dargestellte Drehgeber 50 besitzt eine Fluß-Führungsvorrichtung, die aus zwei identischen Kernschalen 51, 51 besteht, sowie eine Trägerplatine 52, auf der in Form von gedruckten Schaltungen sowohl die Erregerspule 53 als auch vier Meßspulen 54, 55, 56, 57 angebracht sind.

Jede der beiden Kernschalen 51, 51 besteht aus zwei einstückig miteinander verbundenen hohlen Halbzylindern, die unterschiedliche Radien besitzen und so angeordnet sind, daß ihre Zylinderachsen und ihre längs des jeweiligen Zylinderdurchmessers verlaufenden Ränder zusammenfallen, wobei ihre nach außen gekrümmten Halbzylinderwände 58,59 voneinander weg orientiert sind. An der einen Stirnseite ist jeder der beiden Halbzylinder durch eine Bodenwand 60, 61 abgeschlossen, deren Form genau seinem halbzylindrischen Querschnitt entspricht. Die beiden Bodenwände 60, 61 besitzen die gleiche axiale Dicke und gehen einstückig ineinander über. An der den Bodenwänden 60, 61 gegenüberliegenden Stirnseite besitzen die Halbzylinderwände 58, 59 freie Stirnflächen 62, 63, von denen jede die Form eines halben Kreisringes aufweist. Von den Bodenwänden 60, 61 erstreckt sich in der gleichen Richtung wie die Halbzylinderwände 58, 59 ein zentral angeordneter einstückig verbundener Zapfen 65, dessen axiale Höhe größer als die der Halbzylinderwände 58, 59 ist. In Längsrichtung ist der Zapfen 65 von einer konzentrischen Bohrung 66 durchzogen, die wieder zur Aufnahme einer Welle dienen kann. Im zusammengebauten Zustand sind die beiden Kernschalen 51 so miteinander fest verbunden, daß die freien Stirnflächen 67, 67 der Zapfen 65, 65 aneinander anliegen, wobei die Bohrungen 66, 66 miteinander fluchten und sich die Stirnflächen 62, 62 bzw. 63, 63 der Halbzylinderwände 58, 58 bzw. 59, 59 im Abstand gegenüberliegen, und zwischen sich die Spalte 70, 71 einschließen.

Die Trägerplatine 52 ist als Kreisscheibe mit einer zentralen Öffnung 68 ausgebildet, deren Durchmesser etwas größer als der Außendurchmesser der Zapfen 65, 65 ist. Der Außendurchmesser der Kreisscheibe 52 ist etwas größer als der Durchmesser der beiden größeren Halbzylinderwände 58, 58.

Wie man der Fig. 4 entnimmt, wird die Trägerplatine 52 so angeordnet, daß sich die beiden Zapfen 65, 65 durch ihre zentrale Öffnung 68 hindurch erstrecken und sie parallel zu den Bodenwänden 60, 61 der Kernschalen 51 verläuft, wobei sie sich durch die Spalte 70, 71 erstreckt.

Auf ihrer in Fig. 3 oberen Seite weist die Trägerplatine 52 die spiralförmig ausgebildete Erregerspule 53 auf, die die zentrale Öffnung 68 unmittelbar umgibt. Statt dieser als gedruckter Schaltung ausgebildeten Erregerspule kann auch eine aus Draht gewickelte Flachspule in diesem Bereich angebracht werden.

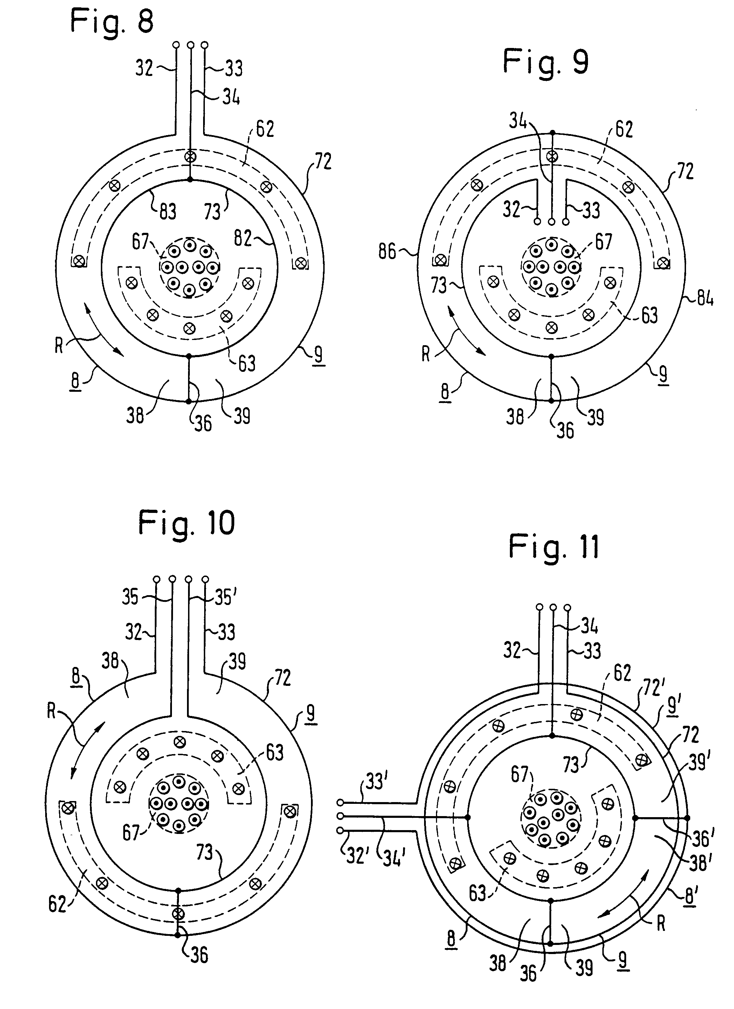

Die vier Meßspulen 54 bis 57 umfassen vier konzentrisch angeordnete kreisförmige Leiter 72 bis 75, von denen jeweils zwei, nämlich die Leiter 72 und 73 einerseits und die Leiter 74 und 75 andererseits eine zwei Meßspulen umfassende Anordnung bilden, wie sie bereits unter Bezugnahme auf Fig. 1 beschrieben wurde. Die einzige Abandlung der Meßspulen 56, 57, die den kleineren Durchmesser besitzen, besteht darin, daß bei ihnen der äußere Leiter 74 vollständig geschlossen ist, während der innere Leiter die zu den Ausgangsanschlüssen führende Unterbrechung aufweist. Außerdem sind die Ausgangsanschlüsse dieser Meßspulen 56, 57 nicht radial nach außen sondern radial nach innen orientiert. Die funktionsmäßigen Unterschiede solcher geometrisch verschiedener Anordnungen werden weiter unten unter Bezugnahme auf die Fig. 8 bis 11 noch genauer erläutert.

Die Abmessungen der Meßspulen 54, 55 sind so gewählt, daß sie im zusammengebauten Zustand von dem im Spalt 70 zwischen den Stirnflächen 62, 62 übertretenden Magnetfluß durchsetzt werden können, während die Meßspulen 56, 57 den im Spalt 71 zwischen den Stirnflächen 63, 63 übertretenden Magnetfluß erfassen.

Im Betrieb wird die Trägerplatine 52 mit dem einen der beiden nicht dargestellten Körper, deren Drehbewegung messend überwacht werden soll, drehfest verbunden, während die aus den beiden Kernschalen 51, 51 gebildete Fluß-Führungsanordnung mit dem anderen dieser beiden Körper in drehfester Verbindung steht. Dem von der Erregerspule 53 erzeugten Magnetfluß werden auch hier wieder zwei weitgehend symmetrische, im wesentlichen den gleichen magnetischen Widerstand besitzende, ringförmig geschlossene Wege angeboten. Der eine dieser beiden Wege erstreckt sich durch die beiden Zapfen 65, 65 über die beiden Bodenflächen 60, 60 mit dem größeren Radius, durch die Zylinderwände 58, 58 und über den zwischen diesen Zylinderwänden eingeschlossenen Spalt 70 hinweg, wobei der ihm folgende Magnetfluß die Meßspulen 54, 55 durchsetzen kann. Der andere der beiden Wege verläuft durch die Zapfen 65, 65 über die Bodenflächen 61, 61 mit dem kleineren Radius, über die Zylinderwände 59, 59 und den Spalt 71 hinweg, wo der ihm folgende Magnetfluß die Meßspulen 56, 57 durchsetzen kann. Die Erzeugung von Meßsignalen erfolgt dabei in gleicher Weise, wie dies unter Bezugnahme auf die Fig. 1 und 2 bereits beschrieben wurde.

Die von den Meßspulen 56, 57 erzeugten Ausgangssignale können dazu verwendet werden, Meßsignale mit einer größeren Amplitude zu erhalten. Im Falle eines Drehgebers ist dies allerdings nur dann sinnvoll, wenn an die Meßgenauigkeit keine großen Anforderungen gestellt werden.

Im allgemeinen wird man daher auf die Meßspulen 56, 57 völlig verzichten und stattdessen zur Erzielung einer größeren Signalamplitude mit einer stärkeren Erregung arbeiten. Der zweite über den Spalt 71 verlaufende ringförmig geschlossene Weg dient dann wieder ausschließlich als Ausgleichsweg, um durch symmetrische Aufteilung des Gesamtflusses höchste Genauigkeit und Kennlinientreue zu erzielen.

Insbesondere der Fig. 4 läßt sich sehr deutlich entnehmen, daß die Halbzylinderwände 59, 59 mit dem kleineren Radius eine nahezu geschlossene Schirmanordnung bilden, außerhalb derer nur geringe Streufelder auftreten. Dies bedeutet, daß die Teile der Meßspulen 54, 55, die sich aufgrund der momentanen relativen Winkelstellung auf der Seite der Halbzylinderwände 59, 59 mit dem kleineren Radius und damit außerhalb der Fluß-Führungsvorrichtung befinden, nur sehr kleinen von der Erregerspule 53 kommenden Streuflüssen ausgesetzt sind.

In die in Fig. 3 obere Kernschale sind symbolisch zwei radial verlaufende und dann nach unten umknickende Magnetflußlinien 76, 77 eingezeichnet, die im radialen Bereich unmittelbar nebeneinander so verlaufen, daß die eine, nämlich die Flußlinie 77 sich in ihrem vertikalen Teil gerade noch durch die Halbzylinderwand 59 mit dem kleineren Radius erstreckt, während die Flußlinie 76 bereits durch die Halbzylinderwand 59 mit dem größeren Radius verläuft. Man sieht, daß die beiden Flußlinien diesen unterschiedlichen Wege völlig ungestört folgen können. Mit anderen Worten: An den je nach Drehrichtung vorauseilenden oder nachlaufenden Spalträndern 78, 79 kommt es anders als beim Stand der Technik kaum zu Feldverzerrungen, da an den seitlichen freien Endflächen 80, 81 der Fluß-Führungsvorrichtung nahezu keine Streuflußlinien entlanglaufen.

Der Vorteil dieser Variante gegenüber der Ausführungsform nach den Fig. 1 und 2 liegt in der hohen Symmetrie und der Tatsache, daß der die Erregerspule durchsetzende, von den beiden Zapfen gebildete Teil der Fluß-Führungsvorrichtung keinen Luftspalt besitzt. Durch letzteres werden Fremdfelder wegen des geringen magnetischen Widerstandes stets durch die Zapfen 65, 65 geleitet und somit von der Meßspulenanordnung ferngehalten.

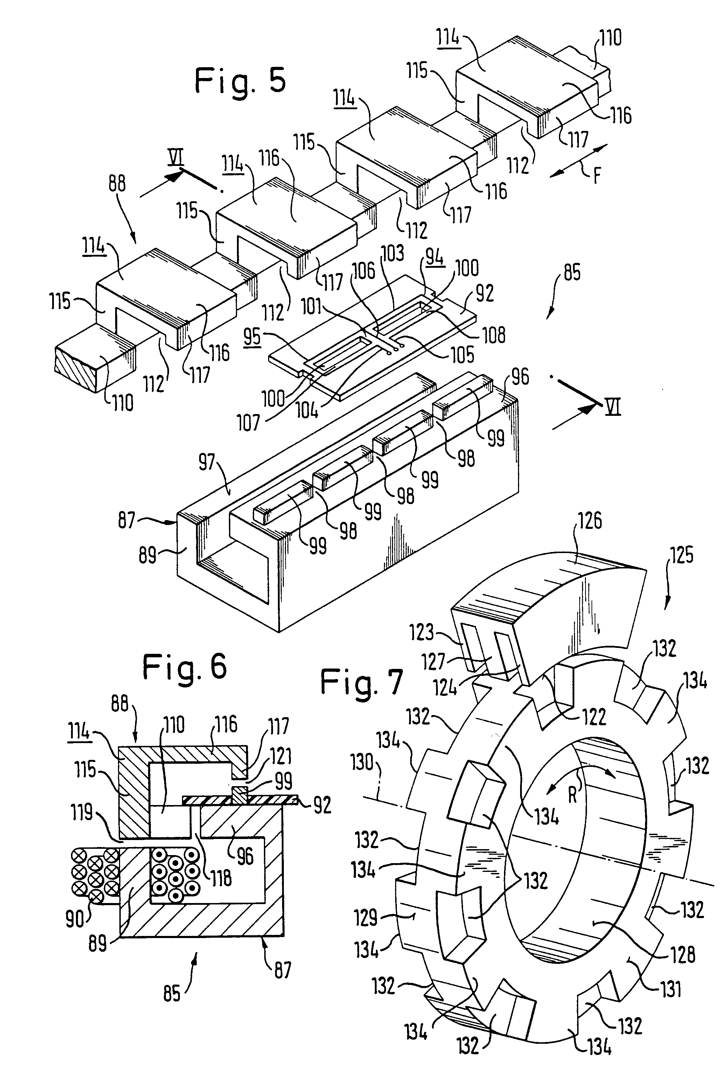

Bei dem in den Fig. 5 und 6 dargestellten Ausführungsbeispiel handelt es sich um einen Lineargeber 85, der analog zum Drehgeber der Fig. 1 und 2 aufgebaut ist. Er umfaßt eine Fluß-Führungsvorrichtung aus ferromagnetischem Material, die aus einem Kern 87 und einem Joch 88 besteht, sowie eine um einen Schenkel 89 des Kerns gewickelte Erregerspule 90 (in Fig. 5 weggelassen) und eine auf der einen Seite einer Trägerplatine 92 in Form einer gedruckten Schaltung ausgebildete Meßspulenanordnung, mit zwei Meßspulen 94, 95.

Der Kern 87 besitzt die Form eines länglichen, rechteckigen, hohlen Quaders, dessen in den Fig. 5 und 6 obere Wand 96 in etwa zur Hälfte weggeschnitten ist, so daß die in den Figuren linke Seitenwand des Hohlquaders als freier Schenkel 89 nach oben ragt. Die obere freie Stirnfläche 97 des Schenkels 89 liegt dabei etwas tiefer als die Innenfläche des stehengebliebenen Teils der oberen Wand 96.

Auf ihrer Außenseite besitzt die obere Wand 96 eine in den Figuren nach oben vorspringende Rippe, die sich parallel zur Längsachse des Kerns 87 nahezu über dessen gesamte Länge erstreckt und einen in etwa quadratischen Querschnitt aufweist. Diese Rippe wird von drei quer verlaufenden Ausnehmungen 98 unterbrochen, die bis zur Oberfläche der Wand 96 reichen und so die Rippe in vier in etwa gleichlange Teilrippen 99 unterteilen.

Die rechteckige Trägerplatine 92 besitzt zwei durchgehende, langgestreckte, rechteckige Öffnungen 100, die in Längsrichtung miteinander fluchten und durch einen Steg 101 voneinander getrennt sind. Anordnung und Dimensionierung dieser Öffnungen 100 ist so getroffen, daß die Trägerplatine 92 auf die Oberseite des Kerns 87 so aufgesetzt werden kann, daß sich die beiden mittleren Teilrippen 99, 99 durch die beiden Öffnungen 100, 100 hindurcherstrecken, während der Steg 101 durch die mittlere der drei Ausnehmungen 98 verläuft.

Die beiden Meßspulen weisen einen rechteckigen, langgestreckten Leiter 103 auf, der die beiden Öffnungen 100 parallel zu deren Rändern nahezu vollständig umgibt. Lediglich auf der einen Seite ist der Leiter 103 im Bereich des Steges 101 unterbrochen und seine beiden freien Enden sind mit Ausgangsanschlüssen 104, 105 verbunden, die sich zueinander parallel und senkrecht zur Längsrichtung des Leiters 103 nach außen erstrecken. Von der gegenüberliegenden Seite des Leiters 103 erstreckt sich ein Anschlußleiter 106 über den Steg 101 zwischen die Ausgangsanschlüsse 104, 105 und parallel zu diesen. Dieser Anschlußleiter 106 bildet den gemeinsamen Rand der von den beiden Meßspulen 94, 95 umschlossenen Flächenbereiche 107, 108.

Das Joch 88 ist bei diesem Ausführungsbeispiel als Stab ausgebildet, der eine langgestreckte flache Platte 110 umfaßt, in die in regelmäßigen Abständen Ausnehmungen 112 eingearbeitet sind, in deren Bereich jeweils eine in den Fig. 5 und 6 nach oben ragende Zinne 114 über die flache Platte 110 übersteht.

Die Dicke der flachen Platte 110 ist gleich der des stehengebliebenen Teils der oberen Wand 96 des Kerns 87, und ihre Breite quer zur Längsrichtung ist etwas kleiner als die Breite des weggeschnittenen Teils der oberen Wand 96. Die rechteckigen Ausnehmungen 112 erstrecken sich von der einen Längskante der flachen Platte 110 in diese hinein und besitzen eine solche Tiefe, daß der verbleibende Teil der flachen Platte die gleiche Dicke wie der freie Schenkel 89 des Kerns 87 aufweist. Die Länge der Ausnehmungen 112 ist gleich der Länge einer jeden der vier Teilrippen 99. Die zwischen den Ausnehmungen 112 stehengebliebenen Teile der flachen Platte 110 besitzen ebenfalls diese Länge.

Die über die flache Platte 110 in den Fig. 5 und 6 nach oben vorstehenden Zinnen 114 besitzen einen in etwa L-förmigen Querschnitt mit einem vertikal nach oben ragenden Schenkel 115, der so angeordnet ist, daß seine in den Figuren linke Seitenfläche mit der entsprechenden Seitenfläche der flachen Platte 110 fluchtet. An seinem in den Figuren oberen Ende geht der vertikale Schenkel 115 in einen horizontalen Schenkel 116 über, der in die gleiche Richtung weist, wie die zwischen den Ausnehmungen 112 stehengebliebenen Teile der flachen Platte 110, zu denen er sich in etwa parallel erstreckt. An seinem in den Figuren rechten Rand besitzt jeder der horizontalen Schenkel 116 eine nach unten weisende Rippe 117, die sich über die gesamte Länge der Zinne 114 erstreckt und damit ebenso lang ist, wie jede der vier Teilrippen 99 des Kerns 87.

Im zusammengebauten Zustand wird das Joch 88 so angeordnet, daß die flache Platte 110 in etwa den Platz des weggeschnittenen Teils der oberen Wand 96 des Kerns 87 einnimmt, wobei die horizontalen Schenkel 116 zum verbliebenen Teil dieser oberen Wand 96 hin gerichtet sind. Das Joch 88 ist mit der in den Figuren rechten Seite seiner flachen Platte 110 vom stehengebliebenen Teil der Wand 96 durch Spalte 118 sowie von der Stirnfläche 97 des Schenkels 89 des Kerns 87 durch einen Spalt 119 getrennt. Die Spalte 118 und der Spalt 119 sind auch hier in Wirklichkeit wesentlich kleiner, als dies in Fig. 6 der Deutlichkeit halber wiedergegeben ist.

Im Bereich der Ausnehmungen 112 ist dagegen der Abstand zwischen dem Joch 88 und dem stehengebliebenen Teil der oberen Wand 96 im Vergleich zu den Spalten 118 sehr groß, so daß aufgrund des entsprechend größeren magnetischen Widerstandes hier nur ein äußerst geringer Streufluß übertritt.

Die Weite, mit der die horizontalen Schenkel 116 der Zinnen 114 von den vertikalen Schenkeln 115 abstehen, ist so bemessen, daß die im zusammengebauten Zustand auf den Kern 87 zuweisende freie Stirnfläche der Rippen 117 mit geringem Abstand den in den Fig. 5 und 6 oberen Stirnflächen der Teile der Rippe 99 gegenüberliegen. Die hier gebildeten Spalte 121 sind ebenfalls kleiner als in Fig. 6 wiedergegeben.

Durch die beschriebene Ausgestaltung werden auch hier dem von der Erregerspule 90 erzeugten Magnetfluß zwei verschiedene Arten von ringförmig geschlossenen Wegen angeboten, wobei jeweils mehrere Wege ein und derselben Art vorhanden sind.

Die erste Art von Wegen führt vom Schenkel 89 über den Spalt 119 in den nach oben gerichteten Schenkel 115, über den vertikalen Schenkel 116, die nach unten weisende Rippe 117, über den Spalt 121 hinweg in eine oder zwei Teilrippen 99, den stehengebliebenen Teil der oberen Wand 96, sowie über die in den Figuren rechte Seitenwand und den Boden des den Kern 87 bildenden Hohlquaders zurück zum Schenkel 89. Der durch diesen Meßweg verlaufende Magnetfluß durchsetzt also die im Bereich der Spalte 121 angeordneten Meßspulen 94, 95 in stellungsabhängiger Weise und erzeugt so die an den Ausgängen der beiden Meßspule abgreifbaren Meßsignale, deren Differenz für die momentane Stellung des Joches 88 bezüglich des Kerns 87 repräsentativ ist und ebenfalls einen linear ansteigenden und abfallenden Dreiecksverlauf besitzt.

Die zweite Art von ringförmig geschlossenen Wegen verläuft vom Schenkel 89 über den Spalt 119 in die flache Platte 110 und über die Spalte 118 unmittelbar in den stehengebliebenen Teil der oberen Wand 96, von wo er sich in gleicher Weise zurück zum Schenkel 89 erstreckt, wie dies oben für die erste Art von Wegen beschrieben wurde. Der in diesen Ausgleichswegen verlaufende Magnetfluß bleibt also immer unterhalb der Ebene der Meßspulen 94, 95 und kann das Meßsignal in keiner Weise beeinflussen oder verfälschen. Er halbiert symmetrisch den Gesamtfluß um weitere Störgrößen auszuschalten.

Verschiebt sich das Joch 88 in Richtung des Doppelpfeiles F gegen den Kern 87, so verschieben sich auch die durch die unteren Stirnseiten der Rippen 117 definierten Durchtrittsflächen über die von den Meßspulen 94, 95 umschlossenen Flächenelemente 107, 108, so daß sich der die Meßspulen durchsetzende magnetische Fluß verändert.

Die beiden äußeren Teilrippen 99 dienen dazu, an den in Längsrichtung vorderen bzw. hinteren Enden der beiden Meßspulen 94, 95 symmetrische und definierte Verhältnisse zu schaffen. Die an diesen Enden verlaufenden Leiterabschnitte der Meßspulen 94, 95, die sich ebenso wie der Anschlußleiter 106 durch die Ausnehmungen 99 erstrecken, können ebenso wie dieser vollständig oder weitgehend in ferromagnetisches Material eingebettet werden, wie dies oben bereits beschrieben wurde.

Das in Fig. 7 wiedergegebene Ausführungsbeispiel eines Drehgebers 125 ist für die genaue messende Erfassung eines vergleichsweise kleinen Winkelbereichs, beispielsweise 45° geeignet, der bei einer vollen 360°-Drehung wiederholte Male (hier achtmal) durchlaufen wird. Zu diesem Zweck weist der Drehgeber 125 einen im Querschnitt E-förmigen Kern 126 auf, um dessen mittleren Schenkel 127 die in Fig. 7 nicht dargestellte Erregerspule gewickelt ist. An der Stirnfläche 122 eines der beiden äußeren E-Schenkel 123, 124 ist eine in Fig. 7 ebenfalls nicht wiedergegebene Meßspulenanordnung vorgesehen, die weitgehend der in Fig. 5 gezeigten Meßspulenanordnung entspricht, d.h. also ebenfalls zwei von in etwa rechteckigen Leitern gebildete, in Längsrichtung des Kerns 126 hintereinander angeordnete Meßspulen umfaßt, die ebenfalls von an der Stirnseite des betreffenden E-Schenkels 123 oder 124 des Kerns 126 vorgesehenen Rippenteilen durchsetzt werden können. Der Hauptunterschied zur Meßspulenanordnung aus Fig. 5 besteht hier darin, daß die Trägerplatine nicht eben sondern ebenso wie die Stirnseiten der E-Schenkel 123, 124, 127 des Kerns 126 in Längsrichtung kreisbogenförmig gekrümmt ist.

Als Joch 128 ist hier ein Rad vorgesehen, das um eine strichpunktierte Achse 130 in Richtung des Doppelpfeils R drehbar gelagert ist. Der Kern 126 ist mit einem geringen Abstand zur Umfangsfläche 129 des Jochs 128 so angeordnet, daß sich seine Längsrichtung in Umfangsrichtung erstreckt, d.h. sein E-förmiger Querschnitt in Richtung der Achse 130 verläuft. Die Länge des Kerns 126 in Umfangsrichtung und die Krümmung der dem Joch 128 zugewandten Stirnflächen der E-Schenkel 123, 124, 127 sind so gewählt, daß der Kern 126 etwa den Winkelbereich von 45° überdeckt, der hier messend aufgelöst werden soll. In das Joch 128 sind von beiden Stirnseiten 131 her Ausnehmungen 132 eingearbeitet, die sich ausgehend von der Umfangsfläche 129 alternierend in die beiden Stirnflächen 131 hineinerstrecken. Auf der gleichen Seite liegende, einander benachbarte Ausnehmungen 132 werden jeweils durch einen stehengebliebenen zinnenförmigen Teil 134 voneinander getrennt. In Umfangsrichtung besitzen die Ausnehmungen 132 und die zinnenförmigen Teile 134 die gleiche Länge, die so gewählt ist, daß eine Ausnehmung 132 und ein zinnenförmiger Teil 134 den zu überwachenden Winkel, hier 45° überdecken.

Die Ausnehmungen 132 der einen Stirnfläche 131 sind gegen die Ausnehmungen 132 der anderen Stirnfläche 131 so versetzt angeordnet, daß sich in axialer Richtung gesehen immer eine Ausnehmung 132 und ein zinnenförmiger Teil 134 gegenüberliegen. Die Tiefe der Ausnehmungen 132 in axialer Richtung ist etwa doppelt so groß wie die Querschnittsbreite der beiden äußeren E-Schenkel 123, 124 des Kerns 126. Die axiale Breite des Jochs 128 ist so gewählt, daß zwischen den von beiden Seiten her eingearbeiteten Ausnehmungen 132 ein durchgehender Steg stehenbleibt, der in etwa die gleiche Breite besitzt wie der mittlere E-Schenkel 127 des Kerns 126, der in etwa die vierfache Breite aufweist, wie die beiden äußeren E-Schenkel 123, 124.

Auch bei dieser Ausführungsform werden dem von der Erregerspule erzeugten magnetischen Fluß zwei ringförmig geschlossene Wege angeboten, von denen der eine vom mittleren E-Schenkel 127 über den E-Quersteg in den einen äußeren E-Schenkel 124, von diesem über dem zwischen den Kern 126 und dem radförmigen Joch 128 vorhandenen Luftspalt in die dem Kern 126 gegenüberliegenden Stirnflächen von wenigstens einem und im Regelfall zwei zinnenförmigen Teilen 134 und von diesen über den mittleren Bereich der Umfangsfläche 129 zurück in den mittleren E-Schenkel 127 verläuft. Der andere Weg erstreckt sich in der gleichen Weise durch den anderen äußeren E-Schenkel 123. Auch hier ist es prinzipiell möglich in dem Spalt zwischen der Stirnfläche der beiden äußeren E-Schenkel jeweils eine eigene Meßspulenanordnung vorzusehen, von denen jede zwei Flächenelemente umfaßt, so daß insgesamt zwei Differenzsignale gebildet und zur Verstärkung der Ausgangssignal-Amplitude miteinander kombiniert werden können. Es ist aber erfindungsgemäß völlig ausreichend, nur in einem der beiden beschriebenen Wege eine Meßspulenanordnung vorzusehen und den anderen Weg als reinen Ausgleichsweg zu verwenden.

Bildet man die Meßspulen auch hier so aus, wie dies oben unter Bezugnahme auf die Fig. 5 und 6 beschrieben wurde, so ergibt sich wieder eine linear ansteigende und linear abfallende Dreiecks-Kennlinie, die einmal voll durchlaufen wird, wenn sich das Joch 128 um 45° dreht.

In den Fig. 8 bis 10 sind Meßspulenanordnungen wiedergegeben, die für Drehgeber geeignet sind, bei denen ein Drehwinkel von nahezu 180° messend erfaßt und aufgelöst werden soll. Die Meßspulenanordnung der Fig. 11 erlaubt dagegen eine Messung von Winkeln bis zu 360° und mehr.

Die Meßspulenanordnungen der Fig. 8 bis 10 umfassen jeweils zwei Meßspulen 8, 9, von denen jede aus einer einzigen Windung besteht, die so ausgebildet ist, daß das von der betreffenden Meßspule umschlossene Flächenelement 38 bzw. 39 in etwa die Form eines halben Kreisringes besitzt. Die beiden halben Kreisringe sind so angeordnet, daß sie sich gegenseitig zu einem geschlossenen Kreisring ergänzen.

Weiterhin sind in den Fig. 8 bis 10 symbolisch durch gestrichelte Linien die Flächenbereiche wiedergegeben, durch die der weitgehend homogene Magnetfluß hindurchtritt, wenn die betreffenden Meßspulenanordnungen in Verbindung mit einer Fluß-Führungsvorrichtung Verwendung finden, wie sie im Zusammenhang mit den Fig. 3 und 4 beschrieben wurde. Es sind dies die Stirnfläche 67 des Zapfens 65 sowie die Stirnflächen 63 der halbzylindrischen Wand 59 (siehe Fig. 3) und die Stirnfläche 62 der halbzylindrischen Wand 58.

Die durch diese Stirnflächen 62, 63 und 67 hindurchtretenden Magnetflußlinien sind in symbolischer Weise dargestellt, wobei in den Fig. 8 bis 10 ein Zeitpunkt wiedergegeben ist, in dem der magnetische Fluß durch die Stirnfläche 67 auf den Betrachter zu und durch die Stirnflächen 62, 63 vom Betrachter weg verläuft, wobei, wie dies im Zusammenhang mit den Fig. 3 und 4 beschrieben wurde, die jeweilige Umlenkung mit Hilfe der halbkreisförmigen Bodenwände 61, 62 der Kernschalen 51 erfolgt.

Die von diesen Kernschalen 51, 51 gebildete Fluß-Führungsvorrichtung ist gegen die in den Fig. 8 bis 10 dargestellten Meßspulenanordnungen jeweils in Richtung des Doppelpfeils R, d.h. in Umfangsrichtung verdrehbar. Dabei verschieben sich die Stirnflächen 62, 63 in dieser Umfangsrichtung, während die Stirnfläche 67 ortsfest bleibt.

Man sieht, daß die Abmessungen der von den Meßspulen 8, 9 umschlossenen Flächenelemente 38, 39 senkrecht zur Bewegungsrichtung, d.h. in den Fig. 8 bis 10 in radialer Richtung wesentlich größer als die entsprechenden Abmessungen der Stirnflächen 62 sind. Letztere sind so positioniert, daß sie in radialer Richtung in etwa in der Mitte der Flächenelemente 38, 39 liegen und so zu den diesen Flächenelemente begrenzenden äußeren bzw. inneren Leitern 72, 73 einen so großen Abstand haben, daß nahezu alle Feldinhomogenitäten, die an den äußeren und inneren Umfangsrändern der durch die Stirnflächen 62 definierten Durchtrittsflächen auftreten, immer innerhalb der Flächenelemente 38, 39 liegen. Geringe Exzentrizitätsbewegungen, wie sie bei "normaler" Lagerung auftreten können, haben somit wenig Einfluß auf das Meßergebnis.

In Bewegungsrichtung, d.h. in Richtung des Umfangs haben die Stirnflächen 62 praktisch die gleiche Länge wie die Flächenelemente 38, 39, d.h. sie bilden jeweils einen halben Kreisring.

Die Größe und Form der Stirnflächen 62 einerseits und der beiden Flächenelemente 38, 39, sowie die gegenseitige Lage der letzteren sind so aufeinander abgestimmt, daß bei der zu überwachenden Drehbewegung in Richtung des jeweiligen Doppelpfeiles R die Stirnfläche 62 sich gegen die Flächenelemente 38, 39 so verschiebt, daß der Magnetfluß durch das eine der beiden Flächenelemente 38, 39 genau in dem Maße zunimmt, wie der Magnetfluß durch das jeweils andere Flächenelement abnimmt und umgekehrt. Damit werden in den Meßspulen 8, 9 zwei Spannungen induziert, deren Differenz die Stellung des einen der beiden zu überwachenden Körper bezüglich des anderen wiedergibt.

Wesentlich ist dabei, daß die beiden einander benachbarten Flächenelemente 38, 39 wenigstens ein gemeinsames Randstück aufweisen, über das sich die durch die Stirnfläche 62 definierte Durchtrittsfläche aufgrund der zu überwachenden Bewegung hinweg verschieben kann. Bei den in den Fig. 8 bis 10 dargestellten Anordnungen ist dies das Randstück, das vom Verbindungsleiter 36 gebildet wird, der sich in radialer Richtung zwischen dem inneren Leiter 73 und dem äußeren Leiter 72 erstreckt. Ein zweites derartiges Randstück wird bei den Ausführungsformen der Fig. 8 und 9 zusammen durch den jeweiligen Anschlußleiter 34 definiert, der dem Verbindungsleiter 36 diametral gegenüberliegt und ebenfalls in radialer Richtung verläuft.

Bei beiden in den Fig. 8 und 9 wiedergegebenen Ausführungsbeispielen sind jeweils zwei Leiterabschnitte 82, 83, bzw. 84, 86 von denen der eine das Flächenelement 38 und der andere das Flächenelement 39 jeweils längs eines Randes, der in etwa parallel zur Verschiebungsrichtung der Stirnfäche 62 gegen das betreffende Flächenelement 8 bis 9 verläuft, d.h. hier längs des inneren (Fig. 8) bzw. äußeren (Fig. 9) Kreisumfanges begrenzt, an ihren beiden Enden so miteinander verbunden, daß sie einen ringförmig geschlossenen Leiter 82, 83 bzw. 84, 86 bilden. Diese ringförmig geschlossenen Leiter können z.B. entweder aus einem Material hergestellt werden, das eine etwas geringere Leitfähigkeit als die normalerweise verwendeten Kupferleiter besitzt, oder sie können so dünn gestaltet werden, daß ihr Widerstand genügend hoch ist, um die Signalquelle, welche die nicht dargestellte Erregerspule speist, nicht zu sehr zu belasten, und den in diesem geschlossenen Leiter 82, 83 bzw. 84, 86 fließenden Strom auf ein unschädliches Maß zu begrenzen.

Über den bereits erwähnten, radial verlaufenden Anschlußleiter 34 ist der geschlossene Leiter 82, 83 (Fig. 8) bzw. 84, 86 (Fig. 9) mit den zur Auswerteelektronik führenden Ausgangsanschlüssen verbunden.

Der jeweils andere, die beiden Flächenelemente 8, 9 am äußeren Kreisumfang (Fig. 8) bzw. am inneren Kreisumfang (Fig. 9) begrenzende Leiter 72 bzw. 73 ist an der dem Verbindungsleiter 36 diametral gegenüberliegenden Stelle unterbrochen und die dadurch entstehenden freien Enden sind über Anschlußleiter 32, 33, die in geringem Abstand parallel zum Anschlußleiter 34 radial nach außen (Fig. 8) bzw. radial nach innen (Fig. 9) verlaufen, mit den entsprechenden Ausgangsanschlüssen verbunden. Jede der Meßspulenanordnungen der Fig. 8 und 9 besitzt also drei Ausgangsanschlüsse, zwischen denen zwei Meßsignale abgegriffen werden können, wobei der mit dem mittleren Anschlußleiter 34 verbundene Ausgangsanschluß als gemeinsamer Bezugspunkt dient. Diese Signale werden gleichgerichtet und ihre Differenz dient als Maß für die momentane Stellung, die die durch die Stirnfläche 62 definierte Durchtrittsfläche bezüglich der beiden Flächenelemente 38, 39 einnimmt.

Aufgrund der unterschiedlichen Ausbildung der Meßspulenanordnung der Fig. 8 und 9 besitzen diese Differenzsignale geringfügig unterschiedliche Eigenschaften: Wie man der Fig. 8 entnimmt, umschließt der innere, geschlossene Leiter 82, 84 den gesamten, innerhalb der Stirnfläche 67 durch die Zeichenebene von unten nach oben hindurchtretenden Magnetfluß, während er von dem durch die Zeichenebene in umgekehrter Richtung hindurchtretenden Magnetfluß nur den Teil umschließt, der innerhalb der Stirnfläche 63 verläuft. Als Folge hiervon wird zu den beiden, zwischen den mit den Anschlußleitern 32, 34 bzw. 33, 34 verbundenen Ausgangsanschlüssen abgreifbaren Spannungen jeweils eine Zusatzspannung addiert. Diese beiden Zusatzspannungen sind zwar stellungsabhängig aber immer gleich groß. Solange man als für die momentane Stellung repräsentatives Signal so, wie oben erwähnt, nur die Differenz dieser beiden Ausgangssignale verwendet, fallen diese beiden Zusatzspannungen heraus. In manchen Fällen ist es aber erforderlich, nicht allein die Differenz der beiden Ausgangssignale sondern den Quotienten aus Differenz und Summe dieser beiden Ausgangssignale als für die momentane Stellung repräsentatives Signal zu verwenden, um mögliche Änderungen der Erregung zu eliminieren. Aus der Summe der beiden Ausgangssignale heben sich aber die Zusatzspannungen nicht mehr heraus. Ihr wesentlichster Effekt ist eine Nullpunktsverschiebung des Ausgangssignals.Darüber hinaus sind die additiven Zusatzspannungen aber auch temperaturabhängig.

Um diesen Störeffekt möglichst klein zu halten, ist daher die Anordnung nach Fig. 9 vorzuziehen, bei der der geschlossene Leiter 84, 86 alle senkrecht zur Zeichenebene von unten nach oben verlaufenden und alle senkrecht zur Zeichenebene von oben nach unten verlaufenden Magnetflußlinien umschließt, so daß der resultierende umschlossene Magnetfluß nahezu gleich Null ist. Zwar wird auch hier wegen der unterschiedlichen radialen Abstände, die die Stirnfläche 62 einerseits und die Stirnfläche 63 andererseits von dem ringförmig geschlossenen Leiter 72 besitzen, in letzterem nach dem Biot-Savart'schen Gesetz eine Spannung induziert, die sich auf die beiden Ausgangssignale additiv aufprägt. Diese Zusatzspannungen sind bei dem Ausführungsbeispiel der Fig. 9 aber erheblich kleiner als beim Ausführungsbeispiel nach Fig. 8, so daß ihre Temperturabhängigkeit das Meßergebnis wesentlich weniger beeinflußt. Man wird daher die Ausführungsform nach Fig. 9 überall dort vorziehen, wo es möglich ist, die Auswerteelektronik innerhalb des inneren Leiters 73 der Meßspulenanordnung unterzubringen. Mit den innenliegenden Ausgangsanschlüssen verbundene, nach außen führende Drähte müssen ansonsten sorgfältig miteinander verdrillt werden, damit sie keine Flächenbereiche umschließen, durch die Magnetflußlinien hindurchtreten können.

Um auch den Anschlußleiter 34 im Sinne der Erfindung zu einem idealen Randleiter zu machen, der die beiden Flächenelemente 38, 39 so voneinander trennt, daß er zu beiden Flächenelementen gehört, kann er anders als in den Fig. 8 und 9 dargestellt, auf der Seite der Anschlüsse, d.h. in Fig. 8 radial außerhalb und in Fig. 9 radial innerhalb des von der Durchtrittsfläche überstrichenen Bereichs so verbreitert werden, daß er den gesamten Zwischenraum zwischen den Anschlußleitern 32, 33 überdeckt. Realisiert man die Meßspulenanordnungen der Fig. 8 und 9 als gedruckte Schaltungen, so ist hierzu zwar ein Ebenenwechsel auf der gedruckten Schaltungsplatine erforderlich, für den jedoch ausreichend Platz zur Verfügung steht.

Unter den eben genannten Voraussetzungen sind diese beiden Ausführungsformen geeignet, Drehbewegungen messend zu verfolgen, die einen Winkel von kleiner 180° überstreichen können. Besonders vorteilhaft ist hier, daß es von jedem der beiden äußeren Anschlußleiter 32 bzw. 33 einen durchgehenden Leiterpfad zum mittleren Anschlußleiter 34 in der Weise gibt, daß jedes der an diesen Anschlußleitern abgreifbaren elektrischen Signale durch Integration über die Magnetflüsse erzeugt wird, die durch die von diesem Leiterpfad umschlossene Fläche hindurchtreten.

Diese Leiterpfade verlaufen in Fig. 8 für die Meßspule 8 vom Anschlußleiter 32 über den linken Halbkeisbogen des äußeren Leiters 72, den Verbindungsleiter 36 und den rechten Halbkreisbogen 82 des inneren Leiters 73 zum Anschlußleiter 34 und für die Meßspule 9 vom Anschlußleiter 33 über den rechten Halbkreisbogen des äußeren Leiters 72, den Verbindungsleiter 36 und den linken Halbkreisbogen 83 des inneren Leiters 73 zum Anschlußleiter 34. Beide Pfade umschließen den größten Teil des in der Anordnung auftretenden Magnetflusses (nämlich immer die gesamten Flüsse durch die Stirnflächen 63 und 67 sowie wechselnde Anteile des Flusses durch die Stirnfläche 62) und damit im wesentlichen auch alle relevanten Störflüsse. Da zur Gewinnung des Meßsignals die Differenz der zwischen den Anschlüssen 32, 34 und 33, 34 abgreifbaren Spannungen gebildet wird, fallen diese Störeinflüsse wieder heraus. Ein wesentlicher Gesichtspunkt ist hier also, in jedes der beiden Teilsignale möglichst alle Störungen in gleicher Weise eingehen zu lassen, damit sich bei der nachfolgenden Subtraktion eine weitestgehende Eliminierung ergibt.

Entsprechendes gilt auch für die Ausführungsform nach Fig. 9, bei der die Integrationspfade für die Meßspule 9 vom Anschlußleiter 32 über den linken Halbkreisbogen des inneren Leiters 73, den Verbindungsleiter 36 und den rechten Halbkreisbogen 84 des äußeren Leiters 72 zum Anschlußleiter 34 und für die Meßspule 8 vom Anschlußleiter 33 über den rechten Halbkreisbogen des inneren Leiters 73, den Verbindungsleiter 36 und den linken Halbkreisbogen 86 des äußeren Leiters 72 zum Anschlußleiter 34 verlaufen.

Bei dem Ausführungsbeispiel der Fig. 10 ist dies dann, wenn es genau in der gezeichneten Weise realisiert wird, nicht möglich. Dieses Beispiel unterscheidet sich nämlich von den eben beschriebenen Ausführungsformen darin, daß beide Leiter 72, 73 an der dem Verbindungsleiter 36 gegenüberliegenden Seite eine Unterbrechung aufweisen, so daß hier vier Ausgangsleiter 32, 33, 35, 35' vorhanden sind, die zu vier Ausgangsanschlüssen führen. Der Vorteil dieser Anordnung besteht darin, daß zwischen diesen Ausgangsanschlüssen, die allerdings nicht miteinander kurzgeschlossen werden dürfen, zwei Signale abgegriffen werden können, auf die keine temperaturabhängigen Zusatzspannungen aufgeprägt sind. Will man diese Ausführungsform so abwandeln, daß auch sie für eine Winkelmessung größer 360° geeignet ist, so können beispielsweise die beiden Anschlußleiter 35, 35' in zwei verschiedenen Ebenen so geführt werden, daß sie in den Bereichen, in denen sie einem die Zeichenebene senkrecht durchsetzenden Magnetfluß ausgesetzt sind, in Richtung dieses Magnetflusses gesehen hintereinanderliegen und miteinander zur Dekkung kommen. Bei einer gedruckten Schaltung kann dies wieder durch eine Verwendung der beiden Platinenseiten geschehen. Außerhalb des von einem Magnetfluß durchsetzten Bereiches können die beiden Anschlußleiter 35, 35' dann so auseinandergeführt werden, daß ihre Anschlußkontakte bequem nebeneinander Platz finden.

Eine weitere Möglichkeit, die eben beschriebenen Schwierigkeiten mit den additiven Zusatzspannungen zu vermeiden, besteht darin, wie in Fig. 11 gezeigt, zwei Meßspulensysteme gemäß Fig. 8 zu verwenden und diese um 90° gegeneinander verdreht anzuordnen. Diese beiden Meßspulensysteme haben den inneren, ringförmig geschlossenen Leiter 73 gemeinsam. Er ist über zwei Verbindungsleiter 36, 36', die um einen Winkel von 90° gegeneinander versetzt angeordnet sind, mit den beiden äußeren Leitern 72, 72' verbunden, die in Wirklichkeit den gleichen Durchmesser besitzen und beispielsweise auf den beiden Flachseiten einer doppelseitigen Trägerplatine für gedruckte Schaltungen angeordnet sein können. Die hierfür erforderlichen Durchkontaktierungen zwischen den beiden Platinenseiten sind in Fig. 11 der Einfachheit halber nicht wiedergegeben. Es ist aber davon auszugehen, daß alle einander überkreuzenden Leiter an der betreffenden Stelle voneinander isoliert sind, soweit ein elektrisch leitender Kontakt nicht durch eine punktförmige Verdickung kenntlich gemacht ist. Jeder der beiden äußeren Leiter 72, 72' ist an der dem zugehörigen Anschlußleiter 36, 36' diametral gegenüberliegenden Seite unterbrochen und dort so, wie dies oben unter Bezugnahme auf die Fig. 8 beschrieben wurde, mit zwei im Abstand nach außen verlaufenden Anschlußleitern 32, 33 bzw. 32', 33' verbunden, zwischen denen sich ein von dem inneren, vollständig geschlossenen Leiter 73 kommender Anschlußleiter 34 bzw. 34' radial nach außen erstreckt. Jedes der beiden Meßspulensysteme besitzt also drei Ausgangsanschlüsse, an denen, wie dies oben unter Bezugnahme auf Fig. 8 erläutert wurde, zwei Signale abgegriffen werden können, deren Differenz repräsentativ für die momentane Stellung der Durchtrittsfläche 64 bezüglich der von den Meßspulen 8, 9 bzw. 8', 9' umschlossenen Flächenelemente 38, 39 bzw. 38', 39' ist. Diese Ausgangsspannungen haben unterschiedliche, bezüglich der geometrischen Drehung um 90° gegeneinander verschobene Werte. Dies bringt zwei Vorteile: Zum einen können zwei Signaldifferenzen, nämlich die Differenz zwischen den Ausgangssignalen an den Anschlüssen 32, 34 und 33, 34 sowie zwischen den Anschlüssen 32', 34' und 33', 34' gebildet und als für die momentane Stellung repräsentatives Signal fortlaufend bewertet werden. Die oben beschriebenen, additiv aufgeprägten Zusatzspannungen fallen durch die Differenzbildung heraus. Änderungen durch die Erregung und Temperatureffekte können durch Bildung eines Quotienten aus einer dieser Differenzen und einer Meßgröße, die diese Einflüsse enthält und z. B. aus dem Erregerstrom abgeleitet ist, eliminiert werden, so daß diese Störungen keine Rolle mehr spielen. Andererseits besitzt aufgrund der erfindungsgemäßen Anordnung die Signaldifferenz an den Ausgangsanschlüssen 32, 33, 34 gerade immer dann einen besonders linearen Verlauf, wenn sich die Signaldifferenz an den Anschlüssen 32', 33', 34' den nicht mehr ideal linearen Dreiecksspitzen annähert und umgekehrt. Man kann also dadurch, daß man die Ausgangssignale, wie oben erwähnt, mit unterschiedlicher Gewichtung miteinander kombiniert, wobei in das eigentlich auszuwertende Signal immer das Signal besonders stark eingeht, das momentan seinen ideal linearen Bereich durchläuft, während das jeweils andere Signal entsprechend schwächer gewichtet wird, eine weitere Verbesserung der angestrebten optimalen Annäherung des tatsächlichen Kennlinienverlaufs an den durch die Konstruktion vorgegebenen idealen Kennlinienverlauf erreichen.

Auch hier ist es möglich, so wie dies oben beschrieben wurde, den jeweils mittleren Anschlußleiter 34, 34' auf die den Anschlußleitern 32, 33 bzw. 32', 33' gegenüberliegende Platinenseite zu führen und dort so breit auszugestalten, daß er den Abstandsstreifen zwischen den beiden zugehörigen anderen Anschlußleitern vollständig überdeckt.

Eine andere, in den Figuren nicht gezeigte Möglichkeit, bei einem Drehgeber eine möglichst große geometrische Symmetrie der Meß- und Ausgleichswege zu erzielen, besteht darin, die Ausführungsform der Fig. 3 und 4 so abzuwandeln, daß die beiden Halbzylinderwände 58, 59 entweder den gleichen Innen- oder den gleichen Außenradius besitzen, aber eine von ihnen in radialer Richtung dicker als die andere ist, sodaß sie eine breitere Stirnfläche 62 bzw. 63 aufweist. Die Meßspulen werden dann so ausgebildet und angeordnet, daß sie zwar von Teilen der breiten, nicht aber der schmalen Stirnflächen überstrichen werden können.

## Patentansprüche

1. Induktiver Stellungsgeber (1) zur Überwachung der Stellung, die der eine von zwei gegeneinander bewegbaren Körpern bezüglich des anderen einnimmt, mit
- wenigstens einer Erregerspule (6;53;90), die zur Erzeugung eines magnetischen Flusses mit Wechselstrom gespeist wird,
- einer Meßspulenanordnung (8,9;94,95), die wenigstens zwei einander benachbarte, jeweils von wenigstens einer Meßspulenwindung umschlossene Flächenelemente (38,39;38',39';107,108) aufweist, und
- einer Fluß-Führungsvorrichtung (3,4;51,52;87,88;126,128) aus ferromagnetischem Material, die für den von der Erregerspule (6;53;90) erzeugten Magnetfluß einen ringförmig geschlossenen Weg vorgibt, der wenigstens einen Spalt (47;70;121) umfaßt, dessen einander gegenüberliegende Wandflächen den zwischen ihnen übertretenden Magnetfluß in einem Raumbereich konzentrieren, der die Flächen der wenigstens zwei Flächenelemente (38,39;38',39';107,108) in einer Durchtrittsfläche schneiden kann, die in Abhängigkeit von der Bewegung des einen der beiden Körper gegen den anderen gegen die wenigstens zwei Flächenelemente (38,39;38',39';107,108) verschiebbar ist, wobei Größe und Form der Durchtrittsfläche und der wenigstens zwei Flächenelemente (38,39;38',39';107,108) so aufeinander abgestimmt sind sowie die gegenseitige Lage der wenigstens zwei Flächenelemente (38,39;38',39';107,108) so gewählt ist, daß aufgrund dieser Verschiebung der Magnetfluß durch das eine Flächenelement (38;38';107) zunimmt, wenn der Magnetfluß durch das andere Flächenelement (39;39';108) abnimmt und umgekehrt, so daß die Meßspulenwindungen elektrische Ausgangssignale liefern, deren Differenz die Stellung des einen der beiden Körper bezüglich des anderen wiedergibt, dadurch **gekennzeichnet,** daß die wenigstens zwei Flächenelemente (38,39,38',39';107,108) wenigstens ein gemeinsames Randstuck (36;36';106) aufweisen, über das sich die Durchtrittsfläche aufgrund der zu überwachenden Bewegung hinwegverschieben kann.

2. Induktiver Stellungsgeber nach Anspruch 1, dadurch **gekennzeichnet,** daß ein gemeinsames Randstück von zwei Leiterstücken gebildet wird, die in Richtung des im Spalt vorhandenen Magnetflusses gesehen in geringem Abstand so hintereinander angeordnet sind, daß sie miteinander zur Deckung kommen.

3. Induktiver Stellungsgeber nach einem der Ansprüche 1 oder 2, dadurch **gekennzeichnet**, daß ein gemeinsames Randstück von einem Leiterstück (34,36) gebildet wird, das den beiden Meßspulenwicklungen, die die beiden Flächenelemente (38,39) umschließen, gemeinsam ist.

4. Induktiver Stellungsgeber nach einem der Ansprüche 1 bis 3, dadurch **gekennzeichnet**, daß zwei Leiterabschnitte (82, 83; 84,86), von denen der eine (82; 84) das eine Flächenelement (38) und der andere (83; 86) das andere Flächenelement (39) jeweils längs eines Randes begrenzt, der in etwa parallel zur Verschiebungsrichtung der Durchtrittsfläche gegen das betreffende Flächenelement (38,39) verläuft, an ihren beiden Enden zur Bildung eines ringförmig geschlossenen Leiters verbunden sind, und daß der ringförmig geschlossene Leiter einen definierten elektrischen Widerstand aufweist.

5. Induktiver Stellungsgeber, der als Drehgeber ausgebildet ist, nach Anspruch 4, dadurch **gekennzeichnet**, daß zwei Flächenelemente (38,39) vorgesehen sind, die jeweils in etwa die Form eines halben Kreisringes aufweisen und so angeordnet sind, daß sie sich in etwa zu einem vollen Kreisring ergänzen, der zur Achse der zu überwachenden Bewegung in etwa konzentrisch ist.

6. Induktiver Stellungsgeber nach Anspruch 5, dadurch **gekennzeichnet**, daß die beiden die Flächenelemente (38,39) innen begrenzenden Leiterabschnitte (82,83) miteinander zur Bildung eines ringförmig geschlossenen Leiters verbunden sind, der mit einem radial verlaufenden, zur Auswerteelektronik führenden ersten Anschlußleiter (34) verbunden ist, daß die beiden die Flächenelemente (38,39) außen begrenzenden Leiterabschnitte an ihren dem ersten Anschlußleiter (34) diametral gegenüberliegenden Enden miteinander und über ein radial verlaufendes Leiterstück (36), das ein gemeinsames Randstück der beiden Flächenelemente (38,39) bildet, mit den beiden die Flächenelemente (38,39) innen begrenzenden Leiterabschnitten (82,83) verbunden sind, während ihre beiden anderen Enden voneinander getrennt und mit einem zweiten bzw. dritten radial verlaufenden, zur Auswerteelektronik führenden Anschlußleiter (32,33) verbunden sind, und daß die drei Anschlußleiter (32,33,34) mit möglichst kleinen Abständen zueinander parallel verlaufen.

7. Induktiver Stellungsgeber nach Anspruch 5, dadurch **gekennzeichnet,** daß die beiden die Flächenelemente (38,39) außen begrenzenden Leiterabschnitte (84,86) miteinander zur Bildung eines ringförmig geschlossenen Leiters (72) verbunden sind, der mit einem radial verlaufenden, zur Auswerteelektronik führenden ersten Anschlußleiter (34) verbunden ist, daß die beiden, die Flächenelemente (38,39) innen begrenzenden Leiterabschnitte an ihren dem ersten Anschlußleiter (34) diametral gegenüberliegenden Enden miteinander und über ein radial verlaufendes Leiterstück (36), das ein gemeinsames Randstück der beiden Flächenelemente (38,39) bildet, mit den beiden die Flächenelemente (38,39) außen begrenzenden Leiterabschnitten (84,86) verbunden sind, während ihre beiden anderen Enden voneinander getrennt und mit einem zweiten bzw. dritten radial verlaufenden, zur Auswerteelektronik führenden Anschlußleiter (32,33) verbunden sind, und daß die drei Anschlußleiter (32,33,34) mit möglichst kleinen Abständen zueinander parallel verlaufen.

8. Induktiver Stellungsgeber nach Anspruch 6, dadurch **gekennzeichnet,** daß in jeder beliebigen Stellung durch die vom ringförmig geschlossenen Leiter (82, 83) umschlossene Fläche sowohl der die Erregerspule als auch der den Ausgleichsweg durchsetzende Magnetfluß hindurchtritt.

9. Induktiver Stellungsgeber nach Anspruch 7, dadurch **gekennzeichnet,** daß in jeder beliebigen Stellung durch die vom ringförmig geschlossenen Leiter (84, 86) umschlossene Fläche sowohl der die Erregerspule als auch der den Ausgleichsweg und der den Meßweg durchsetzende Magnetfluß hindurchtritt.

10. Induktiver Stellungsgeber nach einem der Ansprüche 6 bis 9, dadurch **gekennzeichnet**, daß der erste Anschlußleiter (34) die Breite des Abstandes zwischen dem zweiten und dritten Anschlußleiter (32,33) aufweist und so angeordnet ist, daß er in Richtung des Magnetflusses gesehen mit diesem Abstand zur Deckung kommt, wobei er in einer zweiten Ebene liegt.

## Claims

1. An inductive position indicator (1) for monitoring the position which is occupied by one of two mutually movable bodies with respect to the other, comprising:
- at least one exciter coil (6; 53; 90) which is fed with alternating current to generate a magnetic flux,
- a measurement coil arrangement (8, 9; 94, 95) which has at least two mutually adjacent surface elements (38, 39; 38', 39'; 107, 108) each enclosed by at least one respective measurement coil turn, and
- a flux guide means (3, 4; 51, 52; 87, 88; 126, 128) of ferromagnetic material, which predetermines for the magnetic flux generated by the exciter coil (6; 53; 96) an annularly closed path which includes at least one gap (47; 70; 121) of which the mutually oppositely disposed wall surfaces concentrate the magnetic flux crossing over between them in a spatial region which can intersect the surfaces of the at least two surface elements (38, 39; 38', 39', 107, 108) in a transit surface which is displaceable in dependence on the movement of one of the two bodies relative to the other with respect to the at least two surface elements (38, 39; 38', 39'; 107, 108), wherein the size and shape of the transit surface and the at least two surface elements (38, 39; 38', 39'; 107, 108) are so matched to each other and the mutual position of the at least two surface elements (38, 39; 38', 39'; 107, 108) is so selected that by virtue of said displacement the magnetic flux through the one surface element (38; 38'; 107) increases when the magnetic flux through the other surface element (39; 39'; 108) decreases and vice-versa so that the measurement coil turns supply electrical output signals whose difference reproduces the position of one of the two bodies relative to the other, characterised in that the at least two surface elements (38, 39; 38', 39'; 107, 108) have at least one common edge portion (36' 36'; 106) across which the transit surface can be displaced by virtue of the movement to be monitored.

2. An inductive position indicator according to claim 1 characterised in that a common edge portion is formed by two conductor portions which as viewed in the direction of the magnetic flux present in the gap are arranged at a small spacing in succession such that they come into mutual coincidence.

3. An inductive position indicator according to one of claims 1 and 2 characterised in that a common edge portion is formed by a conductor portion (34, 36) which is common to the measurement coil turns which enclose the two surface elements (38, 39).

4. An inductive position indicator according to one of claims 1 to 3 characterised in that two conductor portions (82, 83; 84, 86) of which the one (82; 84) delimits the one surface element (38) and the other (83; 86) delimits the other surface element (39) along a respective edge which extends approximately parallel to the direction of displacement of the transit surface with respect to the surface element (38, 39) in question are connected at their two ends to form an annularly closed conductor, and that the annularly closed conductor is of a defined electrical resistance.

5. An inductive position indicator which is in the form of rotary indicator according to claim 4 characterised in that there are provided two surface elements (38, 39) which are each approximately in the form of half a circular ring and which are so arranged that they supplement each other approximately to form a full circular ring which is approximately concentric with respect to the axis of the movement to be monitored.

6. An inductive position indicator according to claim 5 characterised in that the two conductor portions (82, 83) which internally delimit the surface elements (38, 39) are connected together to form an annularly closed conductor which is connected to a radially extending first connecting conductor (34) leading to the electronic evaluation system, and that the two conductor portions externally delimiting the surface elements (38, 39) are connected together at their ends which are in diametrally opposite relationship to the first connecting conductor (34) and are connected by way of a radially extending conductor portion (36) forming a common edge portion of the two surface elements (38, 39) to the two conductor portions (82, 83) which internally delimit the surface elements (38, 39), while their other two ends are separated from each other and are connected to a second and third radially extending connecting conductor (32, 33) respectively leading to the electronic evaluation system, and that the three connecting conductors (32, 33, 34) extend in mutually parallel relationship at the smallest possible spacings.

7. An inductive position indicator according to claim 5 characterised in that the two conductor portions (84, 86) which externally delimit the surface elements (38, 39) are connected together to form an annularly closed conductor (72) which is connected to a radially extending first connecting conductor (34) leading to the electronic evaluation system, that the two conductor portions which internally delimit the surface elements (38, 39) are connected together at their ends which are in diametrally opposite relationship to the first connecting conductor (34) and are connected by way of a radially extending conductor portion (36) which forms a common edge portion of the two surface elements (38, 39) to the two conductor portions (84, 86) which externally delimit the surface elements (38, 39), while their other two ends are separated from each other and are connected to a second and a third radially extending connecting conductor (32, 33) respectively leading to the electronic evaluation system, and that the three connecting conductors (32, 33, 34) extend in mutually parallel relationship at the smallest possible spacings.

8. An inductive position indicator according to claim 6 characterised in that in any position both the magnetic flux passing through the exciter coil and also the magnetic flux passing through the compensating path passes through the surface enclosed by the annularly closed conductor (82, 83).

9. An inductive position indicator according to claim 7 characterised in that in any position both the magnetic flux passing through the exciter coil and also the magnetic flux passing through the compensating path and the magnetic flux passing through the measurement path passes through the surface enclosed by the annularly closed conductor (84, 86).

10. An inductive position indicator according to one of claims 1 to 6 characterised in that the first connecting conductor (34) is of the width of the spacing between the second and third connecting conductors (32, 33) and is so arranged that viewed in the direction of the magnetic flux it comes into coincidence with said spacing, being disposed in a second plane.

## Revendications

1. Capteur de position inductif (1) pour la surveillance de la position que prend l'un de deux corps pouvant être déplacés l'un par rapport à l'autre, avec
au moins une bobine d'excitation (6;53;90) qui est alimentée en courant alternatif pour produire un flux magnétique, un ensemble de bobines de mesure (8,9;94,95) qui comprend au moins deux éléments de surface voisins (38,39;38',39';107,108) entourés respectivement d'au moins une spire de bobine de mesure, et
un dispositif de guidage du flux (3,4;51,52;87,88;125,128) en matériau ferromagnétique, qui impose un trajet fermé en forme d'anneau au flux magnétique produit par la bobine d'excitation (6;53;90), qui comprend au moins une fente (47;70;121), dont les surfaces opposées des parois concentrent le flux magnétique qui dépasse entre elles dans une zone de volume qui peut couper les surfaces des au moins deux éléments de surface (38,39,38',39';107,108) dans une surface de passage, qui peut être déplacée contre les au moins deux éléments de surface (38,39;38',39';107,108) en fonction du déplacement de l'un des deux corps par rapport à l'autre, la taille et la forme de la surface de passage et des au moins deux éléments de surface (36,39;38',39';107,108) étant ajustées de telle façon les une aux autres et la position réciproque des au moins deux éléments de surface (38,39;38',39';107,108) étant choisie de telle manière que, du fait de ce déplacement, le flux magnétique passant par un des éléments de surface (38;38';107,) s'accroît lorsque le flux magnétique passant par l'autre élément de surface (39:39'108) décroît et inversement, les spires des bobines de mesure fournissant des signaux électriques de sortie dont la différence reproduit la position de l'un des deux corps par rapport à l'autre, caractérisé en ce que les au moins deux éléments de surface (38,39;38',39';107,108) comprennent au moins un élément de bordure commun (36;36';106) par dessus lequel la surface de passage peut se décaler du fait du déplacement à surveiller.

2. Capteur de position inductif selon la revendication 1, caractérisé en ce qu'un élément de bordure commun est constitué de deux éléments de conducteurs qui, vus en direction du flux magnétique existant dans la fente, sont disposés l'un derrière l'autre avec un faible espacement de manière à ce qu'ils se recouvrent.

3. Capteur de position inductif selon l'une des revendications 1 ou 2, caractérisé en ce qu'un élément de bordure commun est constitué d'un élément de conducteur (34,36) qui est commun aux bobinages des deux bobines de mesure qui entourent les deux éléments de surface (38,39).

4. Capteur de position inductif selon l'une des revendications 1 à 3, caractérisé en ce que deux sections de conducteurs (82,83;84,86), dont l'un (82;84) délimite l'un des éléments de surface (38) et l'autre (83;86) délimite l'autre élément de surface (39) respectivement le long d'un bord, qui s'étend vers l'élément de surface correspondant (38,39) à peu près parallèlement à la direction de déplacement de la surface de passage, sont reliées à leurs deux extrémités pour former un conducteur ayant la forme d'un anneau et en ce que le conducteur fermé en forme d'anneau possède une résistance électrique définie.

5. Capteur de position inductif réalisé sous forme de résolveur selon la revendication 4, caractérisé en ce que deux éléments de surface (38,39), qui ont respectivement à peu près la forme d'un demi anneau de cercle et qui sont disposés de manière à se compléter pour former à peu près un anneau de cercle complet approximativement concentrique à l'axe du déplacement à surveiller, sont prévus.

6. Capteur de position inductif selon la revendication 5, caractérisé en ce que les deux sections de conducteurs (82,83) limitant les éléments de surface (38,39) à l'intérieur sont reliées entre elles pour former un conducteur fermé en forme d'anneau qui est relié à un premier conducteur de raccordement (34) disposé en direction radiale et conduisant au dispositif électronique d'exploitation, en ce qu'à leurs extrémités diamétralement opposées au premier conducteur de raccordement (34), les deux sections de conducteurs limitant les éléments de surface (38,39) à l'extérieur sont reliées entre elles et, par l'intermédiaire d'un élément de conducteur (36) disposé en direction radiale, qui constitue un élément de bordure commun des deux éléments de surface (38,39), aux deux sections de conducteurs (82,83) limitant à l'intérieur les éléments de surface (38,39), tandis que leurs deux autres extrémités sont séparées l'une de l'autre et sont reliées à un deuxième ou à un troisième conducteur de raccordement (32,33) disposé en direction radiale et conduisant au dispositif électronique d'exploitation et en ce que les trois conducteurs de raccordement (32,33,34) sont disposés parallèlement les uns par rapport aux autres avec des espacements les plus petits possibles.

7. Capteur de position inductif selon la revendication 5, caractérisé en ce que les deux sections de conducteurs (84,86) limitant les éléments de surface (38,39) à l'extérieur sont reliées entre elles pour former un conducteur fermé en forme d'anneau (72) qui est relié à un premier conducteur de raccordement (34) disposé en direction radiale et conduisant à l'électronique d'exploitation, en ce qu'à leurs extrémités diamétralement opposées au premier conducteur de raccordement (34), les deux sections de conducteurs limitant les éléments de surface (38,39) à l'intérieur sont reliées entre elles et, par l'intermédiaire d'un élément de conducteur (36) disposé en direction radiale, qui constitue un élément de bordure commun des deux éléments de surface (38,39), aux deux sections de conducteurs (84,86) limitant les éléments de surface (38,39) à l'extérieur, tandis que leurs deux autres extrémités sont séparées l'une de l'autre et sont reliées à un deuxième ou à un troisième conducteur de raccordement (32,33) disposé en direction radiale et conduisant à l'électronique d'exploitation et en ce que les trois conducteurs de raccordement (32,33,34) sont disposés parallèlement les uns par rapport aux autres avec des espacement les plus petits possibles.

8. Capteur de position inductif selon la revendication 6, caractérisé en ce que dans chaque position quelconque, aussi bien le flux magnétique traversant la bobine d'excitation que celui traversant le trajet de compensation passent par la surface entourée par le conducteur fermé en forme d'anneau (82,83).

9. Capteur de position inductif selon la revendication 7, caractérisé en ce que dans chaque position quelconque, aussi bien le flux magnétique traversant la bobine d'excitation que celui traversant le trajet de compensation ainsi que celui traversant le trajet de mesure passent par la surface entourée par le conducteur fermé en forme d'anneau (84,86).

10. Capteur de position inductif selon l'une des revendications 6 à 9, caractérisé en ce que le premier conducteur de raccordement (34) a la largeur de l'espacement entre le deuxième et le troisième conducteur de raccordement (32,33) et est disposé de manière à ce qu'en direction du flux magnétique, il vienne en recouvrement avec cet espacement alors qu'il se trouve à un deuxième niveau.
